# EUROPÄISCHE PATENTSCHRIFT

(11) **EP 3 392 174 B1**
(45) Veröffentlichungstag und Bekanntmachung des Hinweises auf die Patenterteilung: **26.10.2022**
(21) Anmeldenummer: 18168612.2
(22) Anmeldetag: 20.04.2018
(51) Int. Cl.: B65H 26/02

(54) **VERFAHREN UND VORRICHTUNGEN SOWIE SYSTEM ZUM AUF- UND ABWICKELN EINES WICKELS**
METHOD AND DEVICES AND SYSTEM FOR WINDING AND UNWINDING A COIL
PROCÉDÉ ET DISPOSITIF AINSI QUE SYSTÈME D'ENROULEMENT ET DE DÉROULEMENT D'UNE BOBINE

(30) Priorität: 21.04.2017 DE 102017108496
(43) Veröffentlichungstag der Anmeldung: 24.10.2018
(73) Patentinhaber: Windmöller & Hölscher KG, 49525 Lengerich (DE)
(72) Erfinder: Köhn, Uwe, 49078 Osnabrück (DE); HUIL, Oliver, 48477 Hörstel (DE)

(56) Entgegenhaltungen:
- EP-A1- 2 206 666
- DE-A1-102009 029 082
- DE-A1-102009 029 083
- DE-A1-102009 029 084
- DE-A1-102014 005 347
- DE-A1-102015 208 126
- US-A1- 2005 144 094
- US-A1- 2006 090 319
- US-A1- 2009 088 889
- US-A1- 2013 215 448
- US-A1- 2015 292 155

## Beschreibung

Die vorliegende Erfindung betrifft ein Überwachungsverfahren zur Überwachung eines Aufwickelprozesses, ein Steuerverfahren zur Durchführung eines Abwickelprozesses sowie ein Verarbeitungsverfahren zur Durchführung eines Verarbeitungsprozesses eines Bahnmaterials. Ferner betrifft die Erfindung eine Aufwickelvorrichtung zur Durchführung eines Aufwickelprozesses eines Bahnmaterials, eine Abwickelvorrichtung zur Durchführung eines Abwickelprozesses eines Bahnmaterials sowie ein Verarbeitungssystem zur Verarbeitung eines Bahnmaterials.

Um ein Endlosmaterial, wie beispielsweise eine hergestellte Folie, in den Vertrieb oder zum Einsatzort zu bringen, wird das Material häufig portioniert und in Form von Wickeln bereitgestellt. Derartige Wickel werden üblicherweise zunächst auf eine Aufwickelvorrichtung aufgewickelt, um am Einsatzort entsprechend von einer Abwickelvorrichtung abgewickelt zu werden, sodass das Material dort weiter verarbeitet werden kann. Nach dem Abwickeln häufig folgende weitere Verarbeitungsprozesse sind zum Beispiel das Erstellen von Kunststoffsäcken, das Umwickeln von gestapeltem Packgut zur Ladungssicherung oder dergleichen. Es kann jedoch vorkommen, dass das Endlosmaterial bestimmte Fehler oder Unregelmäßigkeiten aufweist, welche eine Weiterverarbeitung unmöglich machen oder zumindest Qualitätseinbußen bewirken.

Aus dem Stand der Technik ist daher bekannt, derartige Fehler bereits während eines Aufwickelprozesses zu erkennen und direkt während des Aufwickelprozesses darauf zu reagieren, indem beispielsweise der Aufwickelprozess gestoppt wird, ein Bahnmaterial, welches auf einen Wickel aufgewickelt wird, aufgetrennt wird und der Wickel damit abgeschlossen wird. Das fehlerhafte Stück des Bahnmaterials wird daraufhin vollständig aus dem Prozess entfernt und eine neue Wickelhülse auf der Aufwickelvorrichtung montiert, sodass ein weiterer Wickel erstellt werden kann. Nachteilig dabei ist, dass dementsprechend der Wickel, bei welchem der Fehler festgestellt worden ist, gegebenenfalls kleiner ist als ursprünglich vorgesehen, das heißt weniger Bahnmaterial trägt, da dieser frühzeitig abgeschlossen wurde. Ferner ist das Umrüsten der Aufwickelvorrichtung aufwendig. Auch der Nachfolgeprozess eines Abwickelns der Wickel wird ferner in Mitleidenschaft gezogen. Falls der zu kleine Wickel überhaupt verkauft werden kann, erzeugt dieser auch bei einem Abwickelprozess zusätzliche Rüstzeiten, da eine Abwickelvorrichtung entsprechend häufiger einen Wickelwechsel erfährt.

Aus der EP 2 206 666 A1 ist Verfahren zur Registrierung eines Fehlers an einer Materialbahn bekannt.

Es ist eine Aufgabe der vorliegenden Erfindung, voranstehende aus dem Stand der Technik bekannte Nachteile zumindest teilweise zu beheben. Insbesondere ist es eine Aufgabe der vorliegenden Erfindung, eine Handhabung von fehlerhaftem Bahnmaterial zu verbessern, sodass die Folgekosten gering gehalten werden können und/oder die Verarbeitbarkeit des fehlerhaften Bahnmaterials zumindest teilweise erhalten bleiben kann.

Die voranstehende Aufgabe wird gelöst durch ein Überwachungsverfahren zur Überwachung eines Aufwickelprozesses mit den Merkmalen des Anspruchs 1, ein Steuerverfahren zur Durchführung eines Abwickelprozesses mit den Merkmalen des Anspruchs 7, ein Verarbeitungsverfahren zur Durchführung eines Verarbeitungsprozesses mit den Merkmalen des Anspruchs 15, eine Aufwickelvorrichtung zur Durchführung eines Aufwickelprozesses mit den Merkmalen des Anspruchs 16, eine Abwickelvorrichtung zur Durchführung eines Abwickelprozesses mit den Merkmalen des Anspruchs 17 sowie ein Verarbeitungssystem zur Verarbeitung eines Bahnmaterials mit den Merkmalen des Anspruchs 18.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Überwachungsverfahren beschrieben worden sind, selbstverständlich auch im Zusammenhang mit dem erfindungsgemäßen Steuerverfahren und/oder dem erfindungsgemäßen Verarbeitungsverfahren und/oder der erfindungsgemäßen Aufwickelvorrichtung und/oder der erfindungsgemäßen Abwickelvorrichtung und/oder dem erfindungsgemäßen Verarbeitungssystem und jeweils umgekehrt, sodass bezüglich der Offenbarung zu den einzelnen Erfindungsaspekten stets wechselseitig Bezug genommen wird bzw. werden kann.

Gemäß einem ersten Aspekt der Erfindung weist das Überwachungsverfahren zur Überwachung eines Aufwickelprozesses an einer Aufwickelvorrichtung folgende Schritte auf:
- Zumindest teilweises Aufwickeln eines Bahnmaterials zu einem Wickel,
- Erfassen zumindest einer Unregelmäßigkeit des Bahnmaterials,
- Bestimmen einer Korrelation der Unregelmäßigkeit zu zumindest einem Laufparameter des Wickels,
- Bereitstellen der Korrelation der Unregelmäßigkeit des Bahnmaterials zu dem Laufparameter des Wickels für einen Abwickelprozess.

Der Wickel kann vorzugsweise während des Aufwickelns auf einer Hülsenhalterung gelagert sein. Dabei weist der Wickel vorzugsweise eine Wickelhülse auf, welche während des Aufwickelprozesses mit zumindest einem Teil des Bahnmaterials umwickelt wird. Während des Aufwickelns wird das Bahnmaterial dabei auf dem Wickel erhöht. Vorzugsweise kann vor dem Aufwickeln eine Herstellung des Bahnmaterials erfolgen. Das Bahnmaterial umfasst eine Kunststofffolie. So weisen Kunststofffolien einen komplexen Herstellprozess auf, bei welchem ggf. viele Parameter zu berücksichtigen sind, so dass ein Informationsaustausch zwischen Einzelprozessen bei Kunststofffolien besonders vorteilhaft ist. Das Erfassen der zumindest einen Unregelmäßigkeit des Bahnmaterials kann vorteilhafterweise sensorisch oder rechnerisch durchgeführt werden. So kann beispielsweise eine Erfassungseinheit vorgesehen sein, durch welche eine Unregelmäßigkeit erfasst wird. Insbesondere kann die Unregelmäßigkeit optisch und/oder akustisch erfasst werden. So kann die Erfassungseinheit beispielsweise zur Erfassung der Unregelmäßigkeit mittels Ultraschall ausgebildet sein oder eine Kamera aufweisen. Auch ein elektronisches Erfassen der Unregelmäßigkeit ist ferner denkbar, indem zum Beispiel ein benötigter Strom eines Antriebsmittels oder dergleichen gemessen wird. Unter einer Unregelmäßigkeit kann insbesondere eine kritische oder unkritische Besonderheit im Verarbeitungsprozess während des Abwickelns verstanden werden. So kann die Unregelmäßigkeit einen Fehler umfassen, den das Bahnmaterial aufweist. Insbesondere kann die Unregelmäßigkeit zumindest eine der folgenden Besonderheiten umfassen:
- erfolgloses Öffnen eines Schlauches des Bahnmaterials,
- zumindest teilweises Reißen des Bahnmaterials,
- Fehlen eines Druckbildes auf dem Bahnmaterial,
- erhöhter Schlupf an einem Antriebsmittel beim Aufwickeln des Bahnmaterials,
- veränderte Drehmomente und/oder Kräfte während des Aufwickelns des Bahnmaterials,
- Verblockungen im Bahnmaterial, insbesondere in einem schlauchförmigen Bahnmaterial,
- zwischenzeitliche Abweichung von einer Herstellungsrezeptur, insbesondere Folienrezeptur, des Bahnmaterials,
- Über- oder Unterschreitung von Spezifikationen von physikalischen Eigenschaften des Bahnmaterials.

Somit kann die Unregelmäßigkeit direkt oder indirekt das Bahnmaterial betreffen. Insbesondere kann die Unregelmäßigkeit dadurch erkannt werden, dass während des Aufwickelprozesses ein Datenabgleich mit einem Herstellprozess des Bahnmaterials stattfindet, so dass eine Veränderung im Herstellprozess, wie z.B. betreffend die Herstellrezeptur, auf eine Veränderung des Bahnmaterials an der Position des Laufparameters schließen lässt. Es ist ferner denkbar, dass das Bahnmaterial als Schlauch aufgewickelt wird, welcher beim Abwickeln oder nach dem Abwickeln geöffnet wird, sodass aus einem zuvor zusammengelegten Schlauch eine dreidimensionale Form entsteht. Erkannte Verblockungen im schlauchförmigen Bahnmaterial können dabei bewirken, dass das Öffnen nicht möglich ist oder nur unter erschwerten Bedingungen möglich ist. Ferner kann das Bahnmaterial mit einem Druckbild bedruckt werden, insbesondere bevor es aufgewickelt wird. Fehlt ein Teil dieses Druckbildes, zum Beispiel aufgrund fehlender Farbe in einer Druckereinheit, kann dies als Unregelmäßigkeit beim Aufwickeln bereits erfasst werden. Unter einem veränderten Schlupf beim Aufwickeln des Bahnmaterials kann weiterhin verstanden werden, dass ein Antriebsmittel, welches für einen Vortrieb des Bahnmaterials sorgt, zumindest teilweise durchrutscht. Dabei unterscheiden sich dann entsprechend die Geschwindigkeit des Antriebs und die Geschwindigkeit des Bahnmaterials. Weiterhin können an unterschiedlichen Stellen des Aufwickelprozesses Kräfte und/oder Momente gemessen werden, welche einen Indikator für das Auftreten einer Unregelmäßigkeit darstellen können. Ferner kann eine Spezifikation von physikalischen Eigenschaften des Bahnmaterials, insbesondere einer Folie, während der Herstellung des Bahnmaterials über- oder unterschritten werden. Dies kann dazu führen, dass das Bahnmaterial beispielsweise bei der Verarbeitung zu Säcken dieser Verarbeitung nicht standhält und ein entsprechender Sack aufreißt. Die physikalischen Eigenschaften des Bahnmaterials können vorzugsweise Spannungsdehnungseigenschaften, insbesondere eine Dehnfähigkeit, des Bahnmaterials umfassen.

Der Laufparameter kann vorzugsweise auch als Laufmeter bezeichnet werden. So umfasst der Laufparameter die tatsächlich aufgewickelte Länge des Bahnmaterials auf dem Wickel bis zum Auftreten der Unregelmäßigkeit. Die Länge kann auf unterschiedliche Art und Weise zur Unregelmäßigkeit in Beziehung gesetzt werden, das heißt korreliert werden. So kann der Laufparameter eine Länge umfassen, die vom Startpunkt des Bahnmaterials, das heißt insbesondere dem zuerst aufgewickelten Ende des Bahnmaterials, bis zum Beginn der Unregelmäßigkeit reicht, bis zum Ende der Unregelmäßigkeit oder bis zu einem Mittelwert zwischen Beginn und Ende der Unregelmäßigkeit. Insbesondere kann unter der Korrelation der Unregelmäßigkeit zu dem Laufparameter somit eine Zuordnung eines bestimmten Wertes des Laufparameters zu einer Position der Unregelmäßigkeit bezogen auf den Wickel und/oder umgekehrt verstanden werden. Insbesondere steht somit entsprechend auch der Laufparameter zur Unregelmäßigkeit in Korrelation bzw. Wechselbeziehung. Erfasst die Unregelmäßigkeit beispielsweise das Fehlen eines Druckbildes, kann der Laufparameter die Länge vom Beginn des Aufwickelns des Bahnmaterials bis zum Beginn des Fehlens des Druckbildes und/oder bis zum Ende des Fehlens des Druckbildes umfassen. Ferner kann der Laufparameter beispielsweise eine Abwickellänge eines abzuwickelnden Bahnmaterials umfassen, bis die Unregelmäßigkeit auftritt. Insbesondere entspricht die Abwickellänge der Gesamtlänge des Bahnmaterials des fertigen Wickels minus der bereits aufgewickelten Länge. Die Korrelation zwischen der Unregelmäßigkeit und dem Laufparameter kann somit umfassen, dass die Unregelmäßigkeit und der Laufparameter in Beziehung gesetzt werden. Dies kann beispielsweise dadurch ausgeführt werden, dass eine Tabelle vorgesehen ist, welche zumindest zwei Spalten aufweist, wobei die Unregelmäßigkeit in die erste Spalte der Tabelle geschrieben wird und der Laufparameter in die zweite Spalte der Tabelle, sodass zurückverfolgbar bzw. zuordbar ist, an welcher Position im Wickel die Unregelmäßigkeit aufgetreten ist. Das Bereitstellen der Korrelation zwischen der Unregelmäßigkeit und dem Laufparameter des Wickels für einen Abwickelprozess kann beispielsweise dadurch durchgeführt werden, dass die zuvor beschriebene Tabelle ausgedruckt wird und/oder angezeigt wird. Dabei sind jedoch noch weitere Formen der Bereitstellung denkbar. Insbesondere kann auch eine Feldvariable eines Computerprogramms anstelle der Tabelle vorgesehen sein oder die Tabelle bereitstellen.

Durch das erfindungsgemäße Überwachungsverfahren ist es damit möglich, auf die Position der Unregelmäßigkeit im Wickel zu schließen. Dadurch ist es möglich, während eines Abwickelprozesses des Wickels auf die Unregelmäßigkeit reagieren zu können. Die Korrelation zwischen Unregelmäßigkeit und Laufparameter stellt dabei eine hohe Genauigkeit zum Auffinden dieser Position bereit, da der Laufparameter zumindest im Wesentlichen unabhängig von einer Dicke des Bahnmaterials und/oder eines Durchmessers des Wickels ist. So kann es insbesondere im Herstellprozess von Folien dazu kommen, dass eine Nenndicke der Folie nach oben abweicht und somit ein Rückschluss von einem Wickeldurchmesser auf eine tatsächliche Länge des abgewickelten Bahnmaterials fehlerbehaftet sein kann. Dadurch, dass während des Abwickelprozesses die Position der Unregelmäßigkeit im Wickel bekannt ist, kann somit während des Abwickelprozesses darauf reagiert werden, sodass auch ein Wickel mit einer fehlerhaften Stelle noch verkaufsfähig ist und beim Abwickelprozess nicht dazu führt, dass eine vollständige Umrüstung erforderlich ist. Vielmehr kann während des Abwickelns beispielsweise entschieden werden, ob die Unregelmäßigkeit noch verarbeitbar ist oder ob ein Teilstück des Bahnmaterials entfernt werden soll. Damit kann auch der Materialbedarf insgesamt verringerbar sein. Das Überwachungsverfahren kann ferner folgenden Schritt umfassen:
- Bewerten der Korrelation der Unregelmäßigkeit zu dem Laufparameter.

Durch die Bewertung kann anhand von vorgegebenen Kriterien eine Einschätzung der Schwere der Unregelmäßigkeit getroffen werden. Auch diese Bewertung kann dem Abwickelprozess bereitgestellt werden. Insbesondere kann auch die Bewertung und die Bereitstellung der Bewertung automatisch durchgeführt werden, sodass eine reproduzierbare Genauigkeit des Verfahrens unterstützt wird.

Im Rahmen der Erfindung ist es ferner denkbar, dass der Laufparameter des Wickels während des Aufwickelns des Bahnmaterials bestimmt wird. Vorzugsweise kann der Laufparameter dabei kontinuierlich während des Aufwickelns des Bahnmaterials bestimmt werden. Das Bestimmen des Laufparameters kann ein direktes Messen umfassen. Der Laufparameter kann somit beispielsweise während des Aufwickelns ständig mitgeschrieben werden, sodass unmittelbar ein Wert beim Erfassen der Unregelmäßigkeit korrespondierend zur Unregelmäßigkeit zur Verfügung steht. Alternativ kann der Laufparameter auch nichtkontinuierlich während des Abwickelns erfasst werden, indem zum Beispiel der Laufparameter erst dann gemessen wird, wenn eine Unregelmäßigkeit erfasst wird. Eine kontinuierliche Erfassung des Laufparameters kann vorteilhafterweise eine analoge und/oder eine digitale Messung des Laufparameters umfassen. So kann ein Erfassungsmittel zum Erfassen des Laufparameters zur inkrementellen Erfassung ausgebildet sein und zum Beispiel nach einer bestimmten Länge oder Umdrehung ein Signal ausgeben, durch welches auf den Laufparameter geschlossen werden kann. Durch die Erfassung des Laufparameters während des Aufwickelns ist es zum Beispiel nicht notwendig, diesen manuell zu messen, sodass das Überwachungsverfahren weiter automatisiert sein kann und damit Kosten eingespart werden können, während gleichzeitig eine reproduzierbare, hohe Genauigkeit vorgesehen sein kann.

Der Laufparameter wird durch Erfassung eines Vorzugparameters des Bahnmaterials bestimmt. Vorzugsweise kann dabei zusätzlich eine Messung einer Umdrehungszahl des Wickels durchgeführt werden. Unter dem Vorzug wird ein Teil eines Antriebsmittels verstanden werden, welcher am Bahnmaterial wirkt, um diesem einen Vortrieb zu ermöglichen. Ein Vorzugparameter umfasst eine Geschwindigkeit, insbesondere eine Umdrehungsgeschwindigkeit und/oder eine Tangentialgeschwindigkeit einer Antriebsrolle, am Vorzug. Die Messung des Vorzugparameters ist beim Aufwickeln direkt in Beziehung zur tatsächlich aufgewickelten Länge setzbar und damit ein hochwertiger Indikator für den Laufparameter. Am Vorzug läuft das Bahnmaterial dabei bereits in einer flachen Erstreckung, sodass entsprechend wechselnde Durchmesser des Wickels am Vorzug keine oder nur eine geringe Rolle spielen. Besonders bevorzugt kann der Laufparameter jedoch durch Messung des Vorzugparameters und durch Messung der Umdrehungszahl des Wickels bestimmt werden. Die Messung der Umdrehungszahl des Wickels lässt eine Korrektur des Vorzugparameters zu, wobei hier vorzugsweise noch eine Abschätzung des Durchmessers des Wickels gegeben sein kann. So kann die eigentliche Messung des Laufparameters am Vorzug stattfinden, diese jedoch auf Grundlage der Messung der Umdrehungszahl des Wickels korrigiert werden, um einen Schlupf am Vorzug zumindest teilweise herauszurechnen. Dadurch ergibt sich eine hohe Genauigkeit der Bestimmung des Laufparameters kann.

Im Rahmen der Erfindung ist ferner denkbar, dass das Bereitstellen der Korrelation der Unregelmäßigkeit zu dem Laufparameter folgenden Schritt umfasst:
- Eintragen der Korrelation der Unregelmäßigkeit zu dem Laufparameter in eine Datenbank.

Unter einer Datenbank kann vorzugsweise eine elektronische Tabelle verstanden werden. So kann beispielsweise auf einem Speichermedium ein SQL-Server vorgehalten werden, welcher eine entsprechende Datenbank bereitstellt. Insbesondere kann die Korrelation der Unregelmäßigkeit und des Laufparameters dadurch bestimmt werden, dass diese derart in Zusammenhang gebracht werden, dass die Unregelmäßigkeit und der Laufparameter beim Eintragen in die Datenbank einander zuordbar sind. Durch die Datenbank kann beispielsweise vor dem Abwickelprozess die Korrelation eingesehen und nachvollzogen werden. Dadurch können beispielsweise mehrere Unregelmäßigkeiten nach dem Ablauf des Aufwickelprozesses gemeinsam für den Abwickelprozess bereitgestellt werden oder gar mehrere Unregelmäßigkeiten aus mehreren unterschiedlichen Aufwickelprozessen für mehrere Wickel gemeinsam bereitgestellt werden. Dadurch kann eine einfache Möglichkeit zur Verfügung gestellt sein, die Unregelmäßigkeit und insbesondere mehrere Unregelmäßigkeiten für den Abwickelprozess zur Verfügung zu stellen, wobei die Datenbank beispielsweise ausgelesen werden kann, um an die gewünschten Informationen zu kommen.

Bei einem erfindungsgemäßen Überwachungsverfahren ist ferner denkbar, dass das Eintragen der Korrelation der Unregelmäßigkeit zu dem Laufparameter in die Datenbank einen Zugriff auf einen externen Server und/oder eine mobile Speichereinheit umfasst. Unter einem externen Server kann dabei eine Recheneinheit verstanden werden, welche über eine Speicherkapazität für die Datenbank verfügt und außerhalb der Aufwickelvorrichtung vorgesehen ist. So kann der externe Server zum Beispiel Teil eines Herstellsystems des Bahnmaterials sein, Teil eines Palettiersystems oder extern bei einem Dienstleistungsunternehmen sich befinden. Dadurch kann die Speicherung der Daten ausgelagert sein, um zum Beispiel die Ressourcen eines Anbieters von Rechenleistungen und/oder Speicherkapazität zu nutzen, sodass Kosten der Aufwickelvorrichtung eingespart werden können, insbesondere da die Aufwickelvorrichtung dadurch lediglich eine Schnittstelle zum externen Server benötigen kann. Über eine derartige Kommunikationsschnittstelle kann die Aufwickelvorrichtung mit der Datenbank auf dem externen Server in Kommunikationsverbindung bringbar sein. Ferner kann der externe Server beispielsweise auch mit der Abwickelvorrichtung verbunden sein oder Teil einer Abwickelvorrichtung sein, sodass Daten über die zu verarbeitenden Wickel direkt zum Verarbeitungsprozess der Wickel fließen. Zusätzlich oder alternativ kann vorgesehen sein, dass die Datenbank auf einer mobilen Speichereinheit vorgesehen ist. So kann beispielsweise die Aufwickelvorrichtung selbst eine entsprechend Speichereinheit umfassen, die zum Beispiel als interne HDD- oder SSD-Festplatte in die Aufwickelvorrichtung eingebaut ist und somit die erzeugten Daten an der Aufwickelvorrichtung zur Verfügung stehen, um beispielsweise visualisiert zu werden. Eine mobile Speichereinheit bietet den Vorteil, dass diese z.B. per USB-Schnittstelle an die Aufwickelvorrichtung angeschlossen werden kann, um entsprechende Daten zu übertragen, wobei die mobile Speichereinheit anschließend beliebig transportierbar ist. Dadurch können die Daten mit einer Lieferung mehrerer Wickel einem Abwickelprozess zur Verfügung zu stellen. Insbesondere kann eine Verarbeitungseinheit vorgesehen sein, durch welche ein Computerprogramm ausführbar ist, um den Zugriff auf einen externen Server und/oder eine mobile Speichereinheit zu ermöglichen. Unter dem Zugriff kann dabei ein Ansprechen des jeweiligen Gerätes bzw. ein Verbinden der Aufwickelvorrichtung mit dem externen Server und/oder der mobilen Speichereinheit verstanden werden.

Im Rahmen der Erfindung ist ferner denkbar, dass das Bereitstellen der Korrelation der Unregelmäßigkeit zu dem Laufparameter folgenden Schritt umfasst:
- Erstellen eines wickelspezifischen Informationsträgers.

Vorzugsweise kann der Informationsträger ferner am Wickel angeordnet werden. Ein Informationsträger kann beispielsweise eine ausgedruckte Liste sein, auf welcher die Unregelmäßigkeit und der Laufparameter vermerkt sind. Vorzugsweise kann der Informationsträger ferner einen Transponder umfassen. Unter einem Transponder kann vorzugsweise eine Sende- und/oder Empfangseinheit verstanden werden, welche die Unregelmäßigkeit und den Laufparameter speichert. Dabei kann der Transponder passiv oder aktiv ausgestaltet sein, wobei ein passiver Transponder benötigte Energie aus einem elektromagnetischen Feld zieht, mit welchem der Transponder beim Auslesen angeregt wird. Alternativ kann der Transponder aktiv ausgestaltet sein und eine eigene Energiequelle, wie eine Batterie, aufweisen, um die Daten bei Aktivierung auszusenden. Eine besonders bevorzugte Ausgestaltung des Transponders ist dabei ein RFID-Chip, welcher einfach und kostengünstig erstellbar ist und am Wickel anordbar ist, um die Informationen dem Abwickelprozess zur Verfügung zu stellen. Ferner ist denkbar, dass der Informationsträger einen Barcode aufweist, der beispielsweise auf den Wickel, insbesondere die Wickelhülse, aufgeklebt werden kann, um die Informationen im Abwickelprozess auf einfache Art und Weise bereitzustellen. Durch die Bereitstellung eines Informationsträgers, insbesondere am Wickel, ist eine einfache Möglichkeit gegeben, die Korrelation zwischen Unregelmäßigkeit und Laufparameter für einen Abwickelprozess mitzuteilen, wobei eine aufwendige IT-Infrastruktur nicht notwendig ist. Der Informationsträger kann vorteilhafterweise manuell oder mit einem mobilen Auslesegerät auslesbar sein.

Im Rahmen der Erfindung ist ferner denkbar, dass das Bereitstellen der Korrelation der Unregelmäßigkeit zu dem Laufparameter folgenden Schritt umfasst:
- Visualisieren der Korrelation der Unregelmäßigkeit zu dem Laufparameter an der Aufwickelvorrichtung.

Das Visualisieren der Korrelation kann beispielsweise auf einem Display der Aufwickelvorrichtung erfolgen, auf welchem jeweils zuordbare Werte zwischen Unregelmäßigkeit und Laufparameter angezeigt werden können. Dadurch kann es einem Bediener der Aufwickelvorrichtung ermöglicht sein, diese Werte zu notieren. So kann der Bediener beispielsweise basierend auf der Visualisierung einen wickelspezifischen Informationsträger erstellen. Zusätzlich oder alternativ kann vorgesehen sein, dass der Bediener die Unregelmäßigkeit bewertet, ob diese für den Abwickelprozess relevant ist, sodass diese gegebenenfalls verworfen wird und lediglich besonders relevante Korrelationen zwischen weiteren Unregelmäßigkeiten und weiteren Laufparametern weitergegeben werden. Somit kann beispielsweise auch vorgesehen sein, dass der Bediener auf einem Touch-Screen die Korrelation bestätigt, bevor diese auf einen wickelspezifischen Informationsträger und/oder automatisch in eine Datenbank geschrieben wird.

Bei einem erfindungsgemäßen Überwachungsverfahren kann ferner vorgesehen sein, dass die Unregelmäßigkeit einen Prozessparameter umfasst, welcher außerhalb eines Parameterbereiches liegt. Der Prozessparameter kann beispielsweise eine Dehnfähigkeit des Bahnmaterials sein, welche in einem bestimmten Bereich abweicht und damit die Unregelmäßigkeit gebildet ist. Der Parameterbereich kann dabei eine erste Parametergrenze, bevorzugt eine erste und eine zweite Parametergrenze aufweisen. Überschreitet der Prozessparameter die erste Parametergrenze und/oder unterschreitet der Prozessparameter die zweite Parametergrenze, kann dies als Unregelmäßigkeit klassifiziert werden. Die Parametergrenzen können absolut oder relativ sein. So kann eine absolute Parametergrenze zu Beginn des Überwachungsverfahrens vordefiniert sein oder vordefiniert werden und damit insbesondere einen festen Wert vorgeben. Eine relative Parametergrenze kann eine Unregelmäßigkeit beispielsweise derart definieren, dass der Prozessparameter zum Beispiel über eine bestimmte Länge dynamisch während des Aufwickelprozesses gemittelt wird und eine bestimmte Prozentzahl über- oder unterhalb der Mittelung die relative Parametergrenze definiert. Dadurch kann eine adaptive Anpassung der Definition der Unregelmäßigkeit gegeben sein, um prozessbedingte Veränderungen entsprechend klassifizieren zu können. Darüber hinaus ist durch die Festlegung eines Prozessparameters bzw. eines Parameterbereiches eine einfache Möglichkeit geschaffen, das Überwachungsverfahren zu automatisieren und gleichzeitig eine Reproduzierbarkeit des Ergebnisses der Klassifikation der Unregelmäßigkeit zu erhalten.

Im Rahmen der Erfindung ist ferner denkbar, dass das Überwachungsverfahren zumindest einen der folgenden Schritte umfasst:
- Bereitstellen einer Materialbeschaffenheit des Bahnmaterials,
- Bereitstellen einer Relativposition des Bahnmaterials zu einer Referenzposition am Wickel.

Die Relativposition kann vorzugsweise eine Querposition des Bahnmaterials auf der Wickelhülse umfassen. So kann sich zum Beispiel eine Zentrierung des Bahnmaterials auf der Wickelhülse während des Aufwickelns verstellen, sodass weiter aufgewickeltes Bahnmaterial nicht deckungsgleich mit dem bereits aufgewickelten Material auf dem Wickel positioniert wird. Dies kann für eine Betrachtung einer Unregelmäßigkeit an einer bestimmten Position relevant sein, wenn entsprechende Reaktionsmaßnahmen während eines Abwickelprozesses durchgeführt werden sollen. Eine Materialbeschaffenheit des Bahnmaterials kann ferner beispielsweise bestimmte Grunddaten des Bahnmaterials umfassen. So kann beispielsweise bei einer Festlegung von relativen Parametergrenzen zur Klassifikation der Unregelmäßigkeit es für den Nachfolgeprozess interessant sein, welche Materialbeschaffenheit an der Position der Unregelmäßigkeit zugrunde liegt, um beispielsweise eine entsprechende Reaktionsmaßnahme zu definieren. Insbesondere kann ferner eine Querposition der Unregelmäßigkeit in Korrelation mit dem Laufparameter einem Abwickelprozess zur Verfügung gestellt werden, um auch hier entsprechende Maßnahmen während des Abwickelprozesses anpassen zu können.

Gemäß einem weiteren Aspekt der Erfindung ist ein Steuerverfahren zur Durchführung eines Abwickelprozesses an einer Abwickelvorrichtung beansprucht. Dabei umfasst das Steuerverfahren folgende Schritte:
- Zumindest teilweises Abwickeln eines Bahnmaterials von einem Wickel,
- Beziehen einer Korrelation einer Unregelmäßigkeit des Bahnmaterials zu zumindest einem Laufparameter des Wickels von einem Aufwickelprozess,
- Durchführen einer Reaktionsmaßnahme in Reaktion auf die Unregelmäßigkeit, wenn eine Position des Bahnmaterials auf Basis der Korrelation der Unregelmäßigkeit zu dem Laufparameter durch das Abwickeln des Bahnmaterials erreicht ist.

Die Position des Bahnmaterials auf Basis der Korrelation der Unregelmäßigkeit zu dem Laufparameter kann dabei vorzugsweise der Ort am Wickel sein, welcher durch den Laufparameter im Aufwickelprozess mittels der Korrelation zwischen der Unregelmäßigkeit und dem Laufparameter definiert worden ist. Insbesondere kann die Position dabei relativ zu einem Wickelende und/oder einem Wickelanfang des Bahnmaterials definiert sein. Vorteilhafterweise kann die Position auf Basis der Korrelation der Unregelmäßigkeit und des Laufparameters direkt am Wickel vorgesehen sein oder an einer anderen Stelle im Abwickelprozess. Insbesondere kann das Erreichen der Position dann gegeben sein, wenn das Bahnmaterial so weit abgewickelt ist, dass die Unregelmäßigkeit an einem Bereich der Abwickelvorrichtung zum Durchführen der Reaktionsmaßnahme positioniert ist. Stellt der Aufwickelprozess beispielsweise den Laufparameter als Länge bereit, welche an der Position der Unregelmäßigkeit bereits auf den Wickel aufgewickelt ist, kann dieser insbesondere umgerechnet werden, indem die Nennlänge des Bahnmaterials abzüglich des Laufparameters berechnet wird, um auf die Position des Laufparameters beim Abwickeln schließen zu können. Vorzugsweise kann die Position des Laufparameters dadurch definiert sein, dass die Länge vom Beginn des Abwickelns bis zur Position des Laufparameters durch den Laufparameter direkt repräsentiert ist. Unter dem Steuerverfahren kann ferner ein Verfahren zur Steuerung und/oder Regelung des Abwickelprozesses verstanden werden. Dabei kann das Beziehen der Korrelation zum Beispiel automatisch erfolgen oder einem Bediener mitgeteilt werden, welcher die Abwickelvorrichtung entsprechend der Information bedient. Dabei kann die Reaktionsmaßnahme zumindest eine der folgenden Aktionen umfassen:
- Unterbrechen des Abwickelprozesses,
- Verändern einer Geschwindigkeit des Abwickelns des Bahnmaterials,
- Verändern von Verarbeitungsparametern,
- Aussetzen einzelner Verarbeitungsschritte,
- Hinzufügen einzelner Sonderverarbeitungsschritte.

So kann das Unterbrechen des Abwickelprozesses einen Stopp der Abwickelvorrichtung umfassen, um beispielsweise einem Bediener einen Zugang in die Abwickelvorrichtung zu ermöglichen. Durch eine Veränderung einer Geschwindigkeit des Abwickelns kann weitere Zeit gewonnen werden, um die Unregelmäßigkeit zum Beispiel zu begutachten oder weitere Reaktionsmaßnahmen durchzuführen. Eine Veränderung von Verarbeitungsparametern kann beispielsweise eine Justierung von einer Schweißtemperatur für nachfolgend aus dem Bahnmaterial hergestellte Säcke umfassen, eine Veränderung einer Kühlzeit des Bahnmaterials oder dergleichen. Auch kann die Veränderung von Verarbeitungsparametern eine Veränderung von Produktvorgaben umfassen, wie beispielsweise Abmaße eines aus dem Bahnmaterial hergestellten Produktes, einer Höhe von aus dem Bahnmaterial hergestellten Säcken oder eines Füllgewichtes derselben. Dadurch kann auch ein unregelmäßiges Bahnmaterial noch verarbeitbar sein, ohne dass der Abwickelprozess angehalten wird und/oder Material verloren geht. Ferner können Verarbeitungsschritte wie Schweißen, Füllen oder Stretchen des Bahnmaterials ausgesetzt werden, sodass Ausschuss leicht erkannt wird und zu einem späteren Zeitpunkt im Verarbeitungsprozess aussortiert werden kann. Auch durch das Hinzufügen weiterer Sonderverarbeitungsschritte wie einem Markieren des Bahnmaterials an der Position der Unregelmäßigkeit, einem Auswerfen von Ausschussmaterial und/oder einem Abtransportieren von Ausschussmaterial kann entsprechend reagiert werden, um den Prozess nicht zu gefährden und dadurch eine insbesondere problemlose Weiterführung des Abwickelprozesses zu ermöglichen.

Insbesondere ist bei einem erfindungsgemäßen Steuerverfahren denkbar, dass die Reaktionsmaßnahme ein visuelles und/oder akustisches Ausgeben einer Warnmeldung umfasst. Durch die Warnmeldung kann beispielsweise ein Bediener der Abwickelvorrichtung über das Auftreten der Unregelmäßigkeit informiert werden, sodass dieser weitere Reaktionsmaßnahmen durchführen kann. Die Warnmeldung kann zum Beispiel über eine Warnleuchte ausgegeben werden, ein Display oder als akustisches Signal. Das akustische Signal kann beispielsweise ein Warnton eines Lautsprechers sein. Dies stellt eine einfache Maßnahme dar, einen Bediener an einer gegebenenfalls kritischen Stelle des Prozesses in den Abwickelprozess einzubinden, wobei der Abwickelprozess bis zur Reaktionsmaßnahme vorzugsweise im Wesentlichen automatisch ablaufen kann.

Im Rahmen der Erfindung kann ferner vorgesehen sein, dass das Beziehen der Korrelation der Unregelmäßigkeit zu dem Laufparameter folgenden Schritt umfasst:
- Auslesen der Korrelation der Unregelmäßigkeit zu dem Laufparameter aus einer Datenbank.

Insbesondere handelt es sich bei der Datenbank um eine Datenbank, in welche zuvor die Daten mittels eines Überwachungsverfahrens eines Aufwickelprozesses eingetragen worden sind. Das Auslesen kann dabei manuell oder automatisch erfolgen. Vorzugsweise kann die Datenbank als Tabelle aufgebaut sein, wobei Unregelmäßigkeit und Laufparameter jeweils in einer Spalte einander zuordbar sein können, zum Beispiel indem beide Daten in der gleichen Zeile der Tabelle vermerkt sind. Vorzugsweise kann die Datenbank dabei ferner noch eine Zuordnung des Laufparameters und der Unregelmäßigkeit zum Wickel ermöglichen, zum Beispiel indem der Wickel eine Kennnummer aufweist, welche ebenfalls in die Datenbank eingetragen worden ist. Dadurch kann es ermöglicht sein, mehrere Wickel in der gleichen Datenbank zu verwalten. Zusätzlich oder alternativ kann die Datenbank speziell für den Wickel angelegt sein und somit die Daten direkt dem Wickel zuordbar sein. Insbesondere kann das Auslesen durch eine Recheneinheit durchgeführt werden, welche automatisch, gesteuert durch ein Computerprogramm, die Unregelmäßigkeit und den Laufparameter für den aktuellen Abwickelprozess ausliest und zur Verfügung stellt.

Im Rahmen der Erfindung ist ferner denkbar, dass das Auslesen der Korrelation der Unregelmäßigkeit zu dem Laufparameter aus der Datenbank einen Zugriff auf einen externen Server und/oder eine mobile Speichereinheit umfasst. So kann die Recheneinheit vorteilhafterweise dazu ausgebildet sein, Daten von dem externen Server und/oder der mobilen Speichereinheit abzurufen. Vorzugsweise können der externe Server und/oder die mobile Speichereinheit zuvor von einem Aufwickelprozess mit den Daten der Unregelmäßigkeit und des Laufparameters versorgt worden sein. Durch den externen Server ist es möglich, die Daten zentral zu verwalten und das Steuerverfahren an einem beliebigen Ort durchzuführen, unabhängig von dem Standort der Datenbank. So kann beispielsweise der Zugriff einen Internetzugang umfassen, wobei eine Internetverbindung mit dem externen Server hergestellt wird und dadurch das Auslesen gewährleistet werden kann. Eine mobile Speichereinheit bietet den Vorteil, dass eine Kommunikationsstruktur in einfacher Art und Weise vorgesehen sein kann, da ein Internetzugriff beispielsweise nicht notwendig ist und die mobile Speichereinheit zum Beispiel mit dem Transport des Wickels oder mit einer Lieferung mehrerer Wickel dem Abwickelprozess zugeführt werden kann, sodass die Abwickelvorrichtung beispielsweise lediglich eine USB-Schnittstelle benötigen kann, um den Zugriff auf die Datenbank gewährleisten zu können. Sowohl der externe Server als auch die mobile Speichereinheit stellen einfache Möglichkeiten dar, die Daten in einfacher Art und Weise insbesondere digital zur Verfügung zu stellen und gleichzeitig einen Aufwickelprozess und einen Abwickelprozess in Bezug auf die relevanten Daten zu verbinden, sodass Daten, die schon beim Aufwickelprozess gewonnen werden, auch im Abwickelprozess zur Verfügung stehen.

Vorteilhafterweise kann bei einem erfindungsgemäßen Steuerverfahren das Beziehen der Korrelation der Unregelmäßigkeit zu dem Laufparameter folgenden Schritt umfassen:
- Auslesen eines wickelspezifischen Informationsträgers.

Vorzugsweise kann der Informationsträger am Wickel angeordnet sein. Der Informationsträger kann einen Barcode umfassen, welcher durch einen Barcodescanner, insbesondere sogar durch ein Mobiltelefon, am Standort der Abwickelvorrichtung oder bei der Anlieferung der Wickel ausgelesen werden kann. Vorzugsweise kann der Informationsträger einen Transponder umfassen, welcher in einfacher Art und Weise auslesbar ist und auch kostengünstig herstellbar ist. Durch die Anordnung des Informationsträgers am Wickel kann ferner sichergestellt sein, dass die korrekte Korrelation zwischen der Unregelmäßigkeit und dem Laufparameter dem jeweiligen Wickel zugeordnet wird, sodass das Handling des Wickels beim Anliefern für den Abwickelprozess vereinfacht ist. Vorzugsweise kann der Informationsträger dazu am Wickel aufgeklebt sein, sodass ein sicherer Halt des Informationsträgers am Wickel gewährleistet ist.

Im Rahmen der Erfindung kann das Steuerverfahren folgenden Schritt umfassen:
- Visualisieren der Korrelation der Unregelmäßigkeit zu dem Laufparameter an der Abwickelvorrichtung.

Dadurch kann gewährleistet sein, dass ein Bediener die Information der Korrelation zwischen der Unregelmäßigkeit und dem Laufparameter noch einmal an der Abwickelvorrichtung kontrollieren kann und/oder bewerten kann. So kann es beispielsweise vorgesehen sein, dass der Bediener vor dem Abwickelverfahren oder vor dem Durchführen der Reaktionsmaßnahme die Unregelmäßigkeit zunächst bestätigt. Insbesondere kann das Visualisieren der Korrelation auf einem Display der Abwickelvorrichtung durchgeführt werden. Dabei kann das Visualisieren ein Darstellen eines Graphs oder eines Diagramms umfassen. Vorzugsweise können dabei mehrere Unregelmäßigkeiten und mehrere Laufparameter jeweils in Korrelation dargestellt werden, sodass der Bediener kritische Stellen des Wickels, an denen zum Beispiel eine Häufung von Unregelmäßigkeiten auftritt, schnell identifizieren und beispielsweise eine Reaktionsmaßnahme definieren kann.

Vorteilhafterweise kann bei einem erfindungsgemäßen Steuerverfahren vorgesehen sein, dass ein Rücklaufparameter des Wickels während des zumindest teilweisen Abwickelns des Bahnmaterials bestimmt wird, wobei der Rücklaufparameter zu dem Laufparameter in Relation gebracht wird. Insbesondere kann der Rücklaufparameter kontinuierlich dabei bestimmt werden. Das Bestimmen des Rücklaufparameters kann vorteilhafterweise ein direktes Messen und/oder eine Berechnung umfassen. Unter einem Rücklaufparameter kann vorzugsweise eine Länge verstanden werden, welche zum Laufparameter in Bezug auf den Wickel korrespondiert. So kann beispielsweise der Laufparameter eine Länge des Bahnmaterials umfassen, welche während des Aufwickelprozesses bereits aufgewickelt ist, wenn die Unregelmäßigkeit auftritt, und der Rücklaufparameter entsprechend eine Länge sein, die bereits abgewickelt ist, wenn die Unregelmäßigkeit auftritt. In diesem Fall kann der Rücklaufparameter eine Länge des auf dem Wickel befindlichen Bahnmaterials abzüglich des Laufparameters sein. Insbesondere kann der Rücklaufparameter somit aus dem Laufparameter sowie weiteren Daten des Wickels berechnet werden. Vorzugsweise kann die Berechnung durch eine Recheneinheit durchgeführt werden, wenn die Position des Laufparameters beim Abwickeln des Bahnmaterials erreicht ist oder wenn der Wickel der Abwickelvorrichtung zugeführt wird. Dadurch kann quasi eine Übersetzung des Laufparameters aus dem Aufwickelprozess für den Abwickelprozess bereitgestellt werden, sodass beide Verfahren in einfacher Art und Weise miteinander kompatibel sind, und insbesondere während des Aufwickelprozesses eine Verarbeitung während des Abwickelprozesses nicht oder nur in geringem Maße berücksichtigt wird. Im Rahmen der Erfindung ist alternativ denkbar, dass z.B. der Laufparameter während des Abwickelns des Bahnmaterials vom Wickel erfasst wird. Vorzugsweise kann der Laufparameter dabei kontinuierlich während des Abwickelns des Bahnmaterials vom Wickel erfasst werden. Eine kontinuierliche Erfassung kann dabei eine analoge und/oder eine digitale Messung umfassen. So kann eine Messeinheit zum Erfassen des Laufparameters oder des Rücklaufparameters inkrementell arbeiten und z. B. nach einer bestimmten Länge oder Umdrehung ein Signal ausgeben, durch welches auf den Laufparameter bzw. Rücklaufparameter geschlossen werden kann. Durch die Erfassung des Rücklaufparameters bzw. des Laufparameters während des Abwickelns ist es z. B. nicht notwendig, diesen manuell zu messen, sodass das Steuerverfahren weiter automatisiert sein kann und damit Kosten eingespart werden können und gleichzeitig eine reproduzierbare, hohe Genauigkeit vorgesehen sein kann.

Weiterhin kann bei einem erfindungsgemäßen Steuerverfahren die Reaktionsmaßnahme ein Ausschneiden eines Teilstückes des Bahnmaterials in einem Bereich der Unregelmäßigkeit umfassen. So ist es beispielsweise beim Fehlen eines Druckbildes denkbar, dass die Abwickelvorrichtung angehalten oder verlangsamt wird und der Bereich, in welchem das Druckbild fehlt, automatisch durch ein Quertrennmittel wie beispielsweise ein in der Abwickelvorrichtung montiertes Messer herausgeschnitten wird. Zusätzlich oder alternativ kann das Ausschneiden auch manuelle Tätigkeiten umfassen. Denkbare manuelle Tätigkeiten sind zum Beispiel das Ausschneiden selbst und/oder ein erneutes Einfädeln des Bahnmaterials in ein Aufnahmemittel des Folgeprozesses. Durch das Ausschneiden kann eine Auswirkung der Unregelmäßigkeit auf einen Folgeprozess vermieden werden und gleichzeitig der Wickel trotz Auftretens der Unregelmäßigkeit weiter genutzt werden. Dabei kann insbesondere das Ausschneiden derart ausgestaltet sein, dass ein Verschnitt des Bahnmaterials minimal gehalten wird.

Im Rahmen der Erfindung kann ferner vorgesehen sein, dass die Reaktionsmaßnahme ein Stoppen der Abwickelvorrichtung umfasst. Durch das Stoppen der Abwickelvorrichtung kann insbesondere ein Abwickeln des Bahnmaterials unterbrochen werden. Insbesondere kann das Stoppen der Abwickelvorrichtung ein zumindest teilweises Abschalten der Abwickelvorrichtung umfassen. Ferner kann dadurch ein Zugang des Benutzers in sicherer Art und Weise gewährleistet werden, sodass weitere manuelle Tätigkeiten am Bahnmaterial durchgeführt werden können, wie beispielsweise ein Begutachten der Unregelmäßigkeit.

Die Position des Laufparameters wird durch Erfassung eines Vorzugparameters des Bahnmaterials bestimmt. Insbesondere kann dabei eine Messung einer Umdrehungszahl des Wickels durchgeführt werden. Die Messung des Vorzugparameters ist beim Abwickeln direkt in Beziehung zur tatsächlich abgewickelten Länge setzbar und damit ein hochwertiger Indikator für den Laufparameter. Besonders bevorzugt kann der Laufparameter jedoch durch Messung des Vorzugparameters und durch Messung der Umdrehungszahl des Wickels bestimmt werden. Die Messung der Umdrehungszahl des Wickels lässt eine Korrektur des Vorzugparameters zu, wobei hier vorzugsweise noch eine Abschätzung des Durchmessers des Wickels gegeben sein kann. So kann die eigentliche Messung des Vorzugparameters auf Grundlage der Messung der Umdrehungszahl des Wickels korrigiert werden, um einen Schlupf am Vorzug zumindest teilweise herauszurechnen. Dadurch ergibt sich eine hohe Genauigkeit der Bestimmung des Laufparameters.

Im Rahmen der Erfindung ist ferner denkbar, dass das Steuerverfahren ferner zumindest einen der folgenden Schritte umfasst:
- Beziehen einer Materialbeschaffenheit des Bahnmaterials,
- Beziehen einer Relativposition des Bahnmaterials zu einer Referenzposition am Wickel.

Durch die Materialbeschaffenheit und/oder die Relativposition kann dabei eine weitere Grundlage für das Durchführen der Reaktionsmaßnahme bereitgestellt und dadurch die Handhabung des Wickels weiter verbessert sein. Insbesondere können dadurch weitere Unregelmäßigkeiten tolerierbar sein und damit der Wickel im Abwickelprozess weiter verarbeitbar sein.

Bei einem erfindungsgemäßen Steuerverfahren ist ferner denkbar, dass auf Basis des Laufparameters und/oder des Rücklaufparameters eine Anzahl von aus dem Bahnmaterial produzierten Produkten bestimmt wird. Vorzugsweise können die Produkte aus Kunststofffolie hergestellte Säcke sein. Somit ist es durch den Laufparameter und insbesondere durch die Berücksichtigung eventuell nicht verarbeiteter Unregelmäßigkeiten des Bahnmaterials möglich, eine Berechnung der Gesamtlänge und/oder Gesamtfläche des Bahnmaterials durchzuführen. Dadurch kann wiederum die Anzahl der aus dem Bahnmaterial produzierten Produkte aus einem bestimmten Wickel berechenbar sein. Im Vergleich zu einer Abschätzung über das Gewicht des Wickels ergibt sich ferner der Vorteil, dass die Bestimmung auf Basis des Laufparameters und/oder des Rücklaufparameters im Wesentlichen oder vollständig um eine ggf. schwankende Dicke des Bahnmaterials bereinigt ist.

Insbesondere kann ein weiterer Aspekt der vorliegenden Offenbarung in einem Quantifizierungsverfahren zur Bestimmung einer Anzahl aus einem Bahnmaterial produzierter Produkte bei einem Abwickelprozesses einer Abwickelvorrichtung liegen, wobei das Quantifizierungsverfahren die folgenden Schritte umfasst:
- Zumindest teilweises Abwickeln des Bahnmaterials von einem Wickel,
- Erfassen zumindest eines Laufparameters und/oder Rücklaufparameters des Wickels,
- Berechnen der Anzahl aus dem Bahnmaterial produzierter Produkte, insbesondere Säcke, auf Basis des Laufparameters und/oder des Rücklaufparameters des Wickels, insbesondere wobei zumindest eine Unregelmäßigkeit des Bahnmaterials und/oder des Abwickelprozesses berücksichtigt wird.

Dadurch ergibt sich der Vorteil, dass die Bestimmung auf Basis des Laufparameters im Wesentlichen oder vollständig um eine ggf. schwankende Dicke des Bahnmaterials bereinigt sein kann, so dass eine Genauigkeit der Bestimmung der Anzahl verbessert sein kann und/oder so dass die Bestimmung der Anzahl produzierter Produkte automatisiert sein kann.

Gemäß einem weiteren Aspekt der Erfindung ist ein Verarbeitungsverfahren zur Durchführung eines Verarbeitungsprozesses eines Bahnmaterials beansprucht. Das Verarbeitungsverfahren weist ferner die folgenden Schritte auf:
- Durchführen eines erfindungsgemäßen Überwachungsverfahrens zur Überwachung eines Aufwickelprozesses an einer Aufwickelvorrichtung,
- Ausführen eines erfindungsgemäßen Steuerverfahrens zur Durchführung eines Abwickelprozesses an einer Abwickelvorrichtung.

Damit bringt ein erfindungsgemäßes Verarbeitungsverfahren die gleichen Vorteile mit sich, wie sie ausführlich bereits mit Bezug auf ein erfindungsgemäßes Überwachungsverfahren und ein erfindungsgemäßes Steuerverfahren beschrieben worden sind. Insbesondere kann der Verarbeitungsprozess dabei ein Aufwickeln des Bahnmaterials und ein Abwickeln des Bahnmaterials umfassen. Das Aufwickeln kann auch insbesondere dann fortgesetzt werden, wenn eine Unregelmäßigkeit während des Aufwickelprozesses erkannt wird und der Abwickelprozess entsprechend darauf reagieren kann.

Vorzugsweise kann das Verarbeitungsverfahren daher auch folgenden Schritt umfassen:
- Übertragen einer Korrelation einer Unregelmäßigkeit des Bahnmaterials zu einem Laufparameter eines Wickels an die Abwickelvorrichtung.

Dadurch kann gewährleistet sein, dass die Daten vom Aufwickelprozess dem Abwickelprozess zur Verfügung gestellt werden, wobei das Übertragen manuell und/oder digital durchgeführt werden kann.

Die Reihenfolge der einzelnen Verfahrensschritte eines erfindungsgemäßen Überwachungsverfahrens, eines erfindungsgemäßen Steuerverfahrens und/oder eines erfindungsgemäßen Verarbeitungsverfahrens kann in der beschriebenen Reihenfolge erfolgen. Weiterhin ist jedoch auch eine andere, als die jeweils beschriebene Reihenfolge der Verfahrensschritte denkbar. Insbesondere können auch einzelne Verfahrensschritte oder alle Verfahrensschritte wiederholt und/oder parallel ausgeführt werden.

Gemäß einem weiteren Aspekt der Erfindung ist eine Aufwickelvorrichtung zur Durchführung eines Aufwickelprozesses eines Bahnmaterials zu einem Wickel beansprucht. Dabei weist die Aufwickelvorrichtung eine Hülsenhalterung auf, auf welcher ein Wickelhülse zum Aufwickeln des Bahnmaterials während des Aufwickelprozesses lagerbar ist, eine Erfassungseinheit, durch welche zumindest eine Unregelmäßigkeit des Bahnmaterials erfassbar ist, und ein Bereitstellungsmittel zum Bereitstellen einer Korrelation der Unregelmäßigkeit zu einem Laufparameter des Wickels für einen Abwickelprozess.

Dabei ist eine Kontrolleinheit vorgesehen, durch welche ein erfindungsgemäßes Überwachungsverfahren ausführbar ist. Das Bereitstellungsmittel kann vorzugsweise eine Schnittstelle und/oder die Kontrolleinheit umfassen, sodass die Daten aus dem Aufwickelprozess für den Abwickelprozess bereitgestellt werden können. Zusätzlich oder alternativ kann das Bereitstellungsmittel ein Display umfassen, auf welchem die Daten einem Bediener visualisiert werden können, sodass dieser die Daten zum Beispiel bei Lieferung des Wickels an den Abwickelprozess weitergeben kann. Damit bringt eine erfindungsgemäße Aufwickelvorrichtung die gleichen Vorteile mit sich, wie sie bereits ausführlich mit Bezug auf ein erfindungsgemäßes Überwachungsverfahren beschrieben worden sind. Weiterhin kann der Laufparameter vorteilhafterweise mittels einer Messeinheit messbar und/oder bestimmbar sein.

Gemäß einem weiteren Aspekt der Erfindung ist eine Abwickelvorrichtung zur Durchführung eines Abwickelprozesses eines Bahnmaterials von einem Wickel beansprucht. Die Abwickelvorrichtung weist eine Wickelhalterung auf, auf welcher der Wickel während des Abwickelprozesses lagerbar ist, eine Bezugsschnittstelle zum Beziehen einer Korrelation einer Unregelmäßigkeit des Bahnmaterials zu einem Laufparameter des Wickels, und eine Positionsermittlungseinheit, durch welche eine Abwicklung des Bahnmaterials während des Abwickelprozesses überwachbar ist, so dass eine Reaktionsmaßnahme in Reaktion auf die Unregelmäßigkeit durchführbar ist, wenn eine Position des Bahnmaterials auf Basis der Korrelation der Unregelmäßigkeit zu dem Laufparameter im Abwickelprozess erreicht ist.

Das Überwachen der Positionsermittlungseinheit kann dabei z.B. eine Erfassung des Laufparameters oder eines Rücklaufparameters umfassen. Die Abwickelvorrichtung weist eine Recheneinheit auf, durch welche ein erfindungsgemäßes Steuerverfahren ausführbar ist. Damit bringt eine erfindungsgemäße Abwickelvorrichtung die gleichen Vorteile mit sich wie sie bereits ausführlich mit Bezug auf ein erfindungsgemäßes Steuerverfahren beschrieben worden sind. Die Bezugsschnittstelle kann dabei eine digitale oder analoge Schnittstelle sein, durch welche die Daten der Abwickelvorrichtung zuführbar sind. So kann die Bezugsschnittstelle beispielsweise eine Netzwerkschnittstelle umfassen, durch welche die Daten mittels eines Zugriffs auf einen Server empfangbar bzw. beziehbar sind. Ferner kann die Bezugsschnittstelle zum Beispiel eine Eingabeeinheit umfassen, durch welche die Daten durch einen Benutzer manuell eingebbar sind. Dabei können die Daten von der Recheneinheit vorzugsweise verarbeitet werden. Die Positionsermittlungseinheit kann vorzugsweise eine Messeinheit und/oder eine Recheneinheit umfassen oder mit der Recheneinheit in Verbindung stehen. Durch die Messeinheit kann vorzugsweise der Laufparameter und/oder ein Rücklaufparameter durch Messung eines Vorzuges des Bahnmaterials und/oder durch Messung einer Umdrehungszahl des Wickels bestimmt werden. Die Messung des Vorzuges kann dabei direkt in Beziehung zur tatsächlich abgewickelten Länge setzbar sein. So kann am Vorzug das Bahnmaterial bereits in einer flachen Erstreckung verlaufen, sodass entsprechend wechselnde Durchmesser des Wickels am Vorzug keine oder nur eine geringe Rolle spielen. Besonders bevorzugt kann der Laufparameter durch Messung des Vorzugs des Bahnmaterials und Messung der Umdrehungszahl des Wickels bestimmt werden. So kann die eigentliche Messung des Laufparameters am Vorzug stattfinden, wobei diese jedoch auf Grundlage der Messung der Umdrehungszahl des Wickels korrigiert werden kann, um einen Schlupf am Vorzug zumindest teilweise herauszurechnen. Dadurch kann eine Genauigkeit der Bestimmung des Laufparameters erhöht sein. Ferner kann eine erfindungsgemäße Abwickelvorrichtung, insbesondere die Recheneinheit der Abwickelvorrichtung, zur Ausführung eines Quantifizierungsverfahrens zur Bestimmung einer Anzahl aus dem Bahnmaterial produzierter Produkte ausgebildet sein.

Es ist bei einer erfindungsgemäßen Abwickelvorrichtung insbesondere ferner denkbar, dass die Abwickelvorrichtung zur Herstellung von Säcken aus dem Bahnmaterial, insbesondere aus schlauchförmigem und/oder flachem Bahnmaterial, ausgebildet ist. Dazu kann die Abwickelvorrichtung zumindest ein Faltungsmittel zum Falten der Säcke und/oder zumindest ein Verschlussmittel zum Verschließen der Säcke aufweisen. So kann das Verschlussmittel dazu ausgebildet sein, eine Falz zu bilden und/oder das Bahnmaterial zu verschweißen, um die Säcke zu verschließen. Das Faltungsmittel kann ein Führungsmittel umfassen, durch welches das Bahnmaterial insbesondere beim Vortrieb derart leitbar ist, dass eine Sackform zumindest teilweise aus dem Bahnmaterial entsteht. Weiterhin kann die Abwickelvorrichtung zumindest ein Einfüllmittel, durch welches aus dem Bahnmaterial hergestellte Säcke befüllbar sind, aufweisen. Somit kann die Abwickelvorrichtung dazu geeignet sein, aus dem Bahnmaterial und/oder Füllprodukten auslieferfertige Säcke herzustellen, insbesondere so dass der gesamte Herstellprozess der Säcke ab der Anlieferung des Rohmaterials (z.B. Bahnmaterial und Füllprodukte) durch die Abwickelvorrichtung abbildbar ist. Durch die Erfassung von einer oder mehrerer Unregelmäßigkeiten kann gleichzeitig ein Ausschuss reduziert und/oder eine Auslieferung fehlerhafter Säcke vermieden werden. Vorzugsweise umfasst die Abwickelvorrichtung somit eine sog. FFS-Maschine, wobei unter der Abkürzung FFS "Form, Fill and Seal" zu verstehen ist.

Gemäß einem weiteren Aspekt der Erfindung ist ein Verarbeitungssystem zur Verarbeitung eines Bahnmaterials beansprucht. Dabei weist das Verarbeitungssystem eine erfindungsgemäße Aufwickelvorrichtung und eine erfindungsgemäße Abwickelvorrichtung auf. Insbesondere kann das Verarbeitungssystem ferner einen externen Server zum Datenaustausch zwischen der Aufwickelvorrichtung und der Abwickelvorrichtung aufweisen. Somit bringt ein erfindungsgemäßes Verarbeitungssystem die gleichen Vorteile mit sich, wie sie bereits ausführlich mit Bezug auf eine erfindungsgemäße Aufwickelvorrichtung beschrieben worden sind und wie sie bereits ausführlich mit Bezug auf eine erfindungsgemäße Abwickelvorrichtung beschrieben worden sind.

Weitere, die Erfindung verbessernde Maßnahmen ergeben sich aus der nachfolgenden Beschreibung zu einigen Ausführungsbeispielen der Erfindung, welche in den Fign. Schematisch dargestellt sind. Sämtliche aus den Ansprüchen, der Beschreibung oder den Zeichnungen hervorgehenden Merkmale und/oder Vorteile einschließlich konstruktiver Einzelheiten, räumlicher Anordnungen und Verfahrensschritte können sowohl für sich als auch in den verschiedensten Kombinationen erfindungswesentlich sein. Dabei ist zu beachten, dass die Fign. nur beschreibenden Charakter haben und nicht dazu gedacht sind, die Erfindung in irgendeiner Form einzuschränken. Es zeigen:
- Fig. 1: eine erfindungsgemäße Aufwickelvorrichtung in schematischer Draufsicht in einem ersten Ausführungsbeispiel,
- Fig. 2: eine erfindungsgemäße Abwickelvorrichtung in schematischer Draufsicht in einem weiteren Ausführungsbeispiel,
- Fig. 3: ein erfindungsgemäßes Verarbeitungssystem in schematischer Ansicht in einem weiteren Ausführungsbeispiel,
- Fig. 4: ein erfindungsgemäßes Überwachungsverfahren zur Überwachung eines Aufwickelprozesses in schematischer Darstellung der Verfahrensschritte in einem weiteren Ausführungsbeispiel,
- Fig. 5a - e: eine schematische Darstellung von Verfahrensschritten des Überwachungsverfahrens des Ausführungsbeispiels der Fig. 4,
- Fig. 6: eine schematische Darstellung eines erfindungsgemäßen Steuerverfahrens zur Durchführung eines Abwickelprozesses in einem weiteren Ausführungsbeispiel,

- Fig. 7a - e: eine schematische Darstellung von Verfahrensschritten des Steuerverfahrens des Ausführungsbeispiels der Fig. 6,
- Fig. 8: ein erfindungsgemäßes Verarbeitungsverfahren zur Verarbeitung eines Bahnmaterials in einem weiteren Ausführungsbeispiel in schematischer Darstellung,
- Fig. 9a - c: denkbare Unregelmäßigkeiten in weiteren Ausführungsbeispielen in schematischer Darstellung.

In den nachfolgenden Figuren werden für die gleichen technischen Merkmale auch von unterschiedlichen Ausführungsbeispielen die identischen Bezugszeichen verwendet.

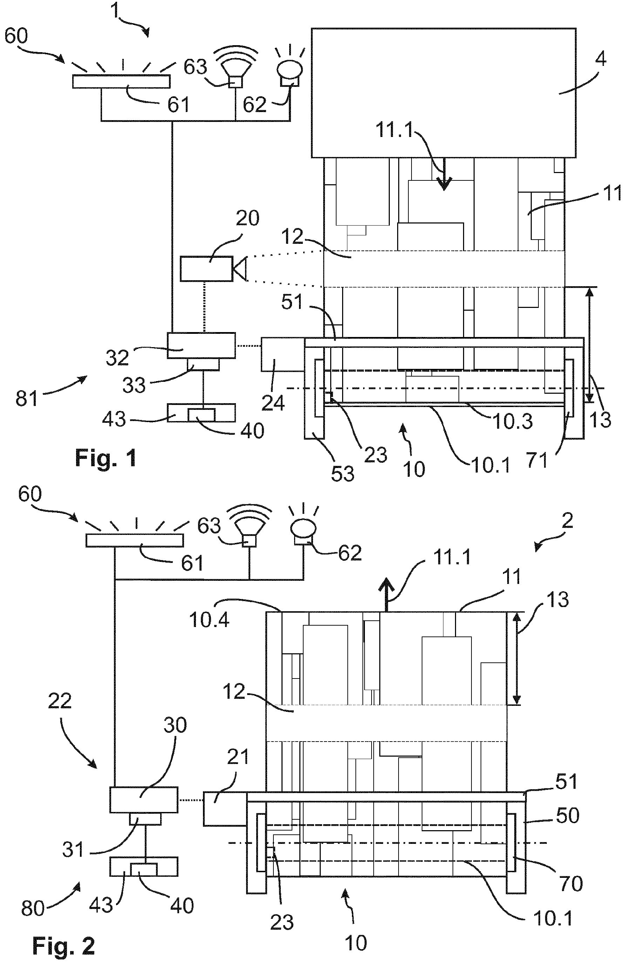

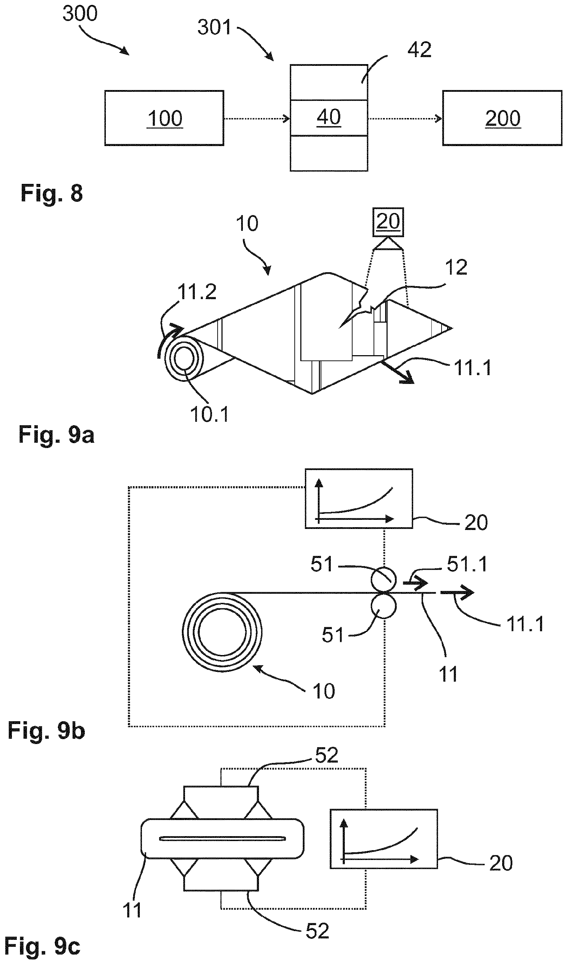

Figur 1 zeigt eine erfindungsgemäße Aufwickelvorrichtung 1 in schematischer Draufsicht in einem ersten Ausführungsbeispiel. Dabei wird ein Bahnmaterial 11 durch eine Herstelleinheit 4 für einen Aufwickelprozess bereitgestellt. Die Aufwickelvorrichtung 1 ist dabei zur Durchführung des Aufwickelprozesses des Bahnmaterials 11 zu einem Wickel 10 geeignet. Dazu weist die Aufwickelvorrichtung 1 ferner eine Hülsenhalterung 71 auf, auf welcher eine Wickelhülse 10.1 lagerbar ist. Im hier dargestellten Zustand des Aufwickelprozesses ist bereits ein Teil des Bahnmaterials 11 auf die Wickelhülse 10.1 zu einem Wickel 10 aufgewickelt, wobei ein Vortrieb 11.1 des Bahnmaterials 11 durch ein Antriebsmittel 53 unterstützt oder gewährleistet wird. Vorzugsweise kann sich der Wickel 10 mit einer bestimmten Umdrehungszahl 11.2 dabei drehen. Dazu weist das Antriebsmittel 53, Antriebsrollen 51 auf, zwischen denen das Bahnmaterial 11 zentriert durchgeführt wird und anschließend auf den Wickel 10 aufgerollt wird. Zusätzlich oder alternativ kann die Hülsenhalterung 71 selbst derart ausgebildet sein, dass diese drehbar ist, insbesondere durch den Antrieb 53, so dass durch die Drehung der Wickelhülse 10.1 bzw. der Hülsenhalterung 71 der Vortrieb 11.1 realisiert oder unterstützt wird. Ferner weist die Aufwickeivorrichtung 1 eine Erfassungseinheit 20 auf, durch welche zumindest eine Unregelmäßigkeit 12 des Bahnmaterials 11 erfassbar ist. Die Unregelmäßigkeit 12 ist hier als Fehlen eines Druckbildes auf dem Bahnmaterial 11 dargestellt. Dabei sind jedoch noch weitere Alternativen denkbar, wie beispielsweise Unregelmäßigkeiten 12, die in den Figuren 9a bis c dargestellt sind. Wird die Unregelmäßigkeit 12 durch die Erfassungseinheit 20 erfasst, kann insbesondere durch eine Kontrolleinheit 32 die Unregelmäßigkeit 12 mit einem Laufparameter 13 des Wickels 10 in Korrelation gebracht werden bzw. die Korrelation bestimmt werden. Der Laufparameter 13 kann eine bereits aufgewickelte Länge des Bahnmaterials 11 auf den Wickel 10 von einem Wickelanfang 10.3 bis zum Auftreten der Unregelmäßigkeit 12 umfassen und/oder eine bereits aufgewickelte Länge des Bahnmaterials 11 vom Wickelanfang 10.3 bis zum Ende der Unregelmäßigkeit 12.

Zum Erfassen des Laufparameters 13 kann ferner eine Messeinheit 24 vorgesehen sein, welche dazu geeignet ist, die tatsächlich aufgewickelte Länge des Bahnmaterials 11 zu erfassen. Werden Unregelmäßigkeit 12 und Laufparameter 13 durch die Kontrolleinheit 32 zusammengeführt, kann eine Korrelation zwischen der Unregelmäßigkeit 12 und dem Laufparameter 13, bereitgestellt werden, bzw. entstehen. Die Korrelation kann dabei umfassen, dass der Laufparameter 13 der Unregelmäßigkeit 12 in Bezug auf den Wickel 10 zuordbar ist. Dadurch kann auch in einem Nachfolgeprozess, insbesondere in einem Abwickelprozess auf die Unregelmäßigkeit 12 im Wickel 10 reagiert werden. Dazu umfasst die Aufwickelvorrichtung 1 eine Bereitstellungseinheit 81, welche dazu ausgebildet ist, die Korrelation zwischen der Unregelmäßigkeit 12 und dem Laufparameter 13 bereitzustellen. Dazu kann die Bereitstellungseinheit 81 die Kontrolleinheit 32 umfassen. Insbesondere umfasst die Bereitstellungseinheit 81 eine Kommunikationsschnittstelle 33, durch welche ein Zugriff auf eine Datenbank 40 bewirkbar ist. Dadurch kann durch die Kontrolleinheit 32 die Korrelation zwischen der Unregelmäßigkeit 12 und dem Laufparameter 13 in einer Datenbank 40 abgespeichert werden. Insbesondere kann die Datenbank 40 Teil einer mobilen Speichereinheit 43 sein, welche an die Aufwickelvorrichtung 1, bzw. die Kommunikationsschnittstelle 33 angeschlossen ist. So kann die Kommunikationsschnittstelle 33 beispielsweise eine USB-Schnittstelle sein. Zusätzlich oder alternativ kann die Datenbank 40 auf einem externen Server 42 vorgesehen sein, welcher insbesondere nicht Teil der Aufwickelvorrichtung 1 ist. Dadurch können die Daten beispielsweise zentralisiert verwaltet werden. Darüber hinaus weist die Aufwickelvorrichtung 1 eine Ausgabeeinheit 60 auf, welche ein Display 61, einen Lautsprecher 63 und ein Leuchtmittel 62 aufweist. Alternativ können das Display 61 und/oder der Lautsprecher 63 und/oder das Leuchtmittel 62 einzeln vorgesehen sein. Dadurch ist beispielsweise ein Ausgeben einer Warnmeldung möglich, wenn die Erfassungseinheit 20 eine Unregelmäßigkeit 12 detektiert. Über das Display 61 kann ferner insbesondere die Korrelation zwischen der Unregelmäßigkeit 12 und dem Laufparameter 13 an der Aufwickelvorrichtung 1 anzeigbar sein, so dass ein Bediener Zugriff darauf hat. Ferner kann ein Informationsträger 23, insbesondere in Form eines Transponders, am Wickel 10 angeordnet werden, wobei der Informationsträger 23 die Korrelation zwischen der Unregelmäßigkeit 12 und dem Laufparameter 13 aufweisen kann.

Figur 2 zeigt ferner eine erfindungsgemäße Abwickelvorrichtung 2 zur Durchführung eines Abwickelprozesses eines Bahnmaterials 11 von einem Wickel 10. Insbesondere kann der Wickel 10 durch eine Aufwickelvorrichtung gemäß dem Ausführungsbeispiel der Figur 1 hergestellt worden sein. Dabei weist die Abwickelvorrichtung 2 eine Wickelhalterung 70 auf, auf welcher der Wickel 10 während des Abwickelprozesses lagerbar ist. Um einen Vortrieb 11.1 des Bahnmaterials 11 zu erzeugen, kann ferner ein Antriebsmittel 50 vorgesehen sein, welches über Antriebsrollen 51 verfügt, die den Vortrieb 51 des Bahnmaterials 11 ermöglichen. So kann jede der Antriebsrollen 51 beispielsweise eine strukturierte Oberfläche aufweisen, um bei Kontaktierung mit dem Bahnmaterial 11 und Drehung das Bahnmaterial 11 zu befördern. Zusätzlich oder alternativ kann auch durch das Antriebsmittel 50 gewährleistet sein, dass der Wickel 10 aktiv gedreht wird und dadurch der Vortrieb 11.1 des Bahnmaterials 11 unterstützt oder gewährleistet wird. Ferner weist die Abwickelvorrichtung 2 eine Positionsermittlungseinheit 22 auf, durch welche eine Abwicklung des Bahnmaterials 11 während des Abwickelprozesses überwachbar ist, so dass eine Reaktionsmaßnahme in Reaktion auf eine Unregelmäßigkeit 12 durchführbar ist, wenn die Position des Bahnmaterials 11 im Abwickelprozess erreicht ist. Dazu kann die Positionsermittlungseinheit 22 vorzugsweise eine Recheneinheit 30 umfassen, die mit einer Messeinheit 21 in Kommunikationsverbindung steht, wobei durch die Messeinheit 21 die tatsächlich abgewickelte Länge des Bahnmaterials 11 vom Wickel 10 erfassbar ist oder der Recheneinheit 30 Messdaten zur Verfügung stellbar sind, so dass die tatsächlich abgewickelte Länge des Bahnmaterials 11 berechenbar ist. Darüber hinaus umfasst die Abwickelvorrichtung 2 eine Bezugsschnittstelle 80, durch welche eine Korrelation zwischen einer Unregelmäßigkeit 12 und einem Laufparameter 13 des Wickels 10 beziehbar ist. Dazu kann die Bezugsschnittstelle 80 z. B. eine Kommunikationsschnittstelle 31 umfassen, um der Recheneinheit 30 einen Zugriff auf eine Datenbank 40 zu ermöglichen, wobei die Datenbank 40 vorzugsweise auf einer mobilen Speichereinheit 43 oder einer internen Speichereinheit vorgesehen sein kann, die an der Abwickelvorrichtung 2 angeschlossen ist. Zusätzlich oder alternativ kann die Datenbank 40 auf einem externen Server 42 vorgesehen sein, der außerhalb der Abwickelvorrichtung 2 angeordnet ist und somit zentralisiert die Daten zur Verfügung stellen kann. Zusätzlich oder alternativ kann ferner ein Display 61 einer Ausgabeeinheit 60 vorgesehen sein, wobei das Display 61 auch als Touchscreen ausgestaltet sein kann, um die Daten einzugeben und damit der Abwickelvorrichtung 2 zur Verfügung zu stellen. Die Reaktionsmaßnahme in Reaktion auf die Unregelmäßigkeit 12 kann dabei eine Anzeige auf dem Display 61 umfassen, eine Ausgabe eines Warntons über einen Lautsprecher 63 und/oder eines Warnsignals über ein Leuchtmittel 62. Zusätzlich oder alternativ kann vorgesehen sein, dass ein Informationsträger 23 des Wickels 10 ausgelesen wird, wobei der Informationsträger 23 vorzugsweise als Transponder, insbesondere als RFID-Transponder vorgesehen sein kann. Der Informationsträger 23 ist dabei vorzugsweise am Wickel 10 angeordnet, so dass dieser dem Wickel 10 eindeutig zuordbar ist. Vorzugsweise kann durch die Recheneinheit 30 ferner eine Bestimmung einer Anzahl von aus dem Bahnmaterial 11 produzierten Produkte durchgeführt werden, so dass diese anstelle einer Zählung auf Grundlage des Laufparameters 13 bestimmt werden und damit die Anzahl dem Wickel 10 zuordbar ist. Insbesondere kann durch die Abwickelvorrichtung 2 ein Quantifizierungsverfahren zur Bestimmung der Anzahl aus dem Bahnmaterial 11 produzierter Produkte durchführbar sein.

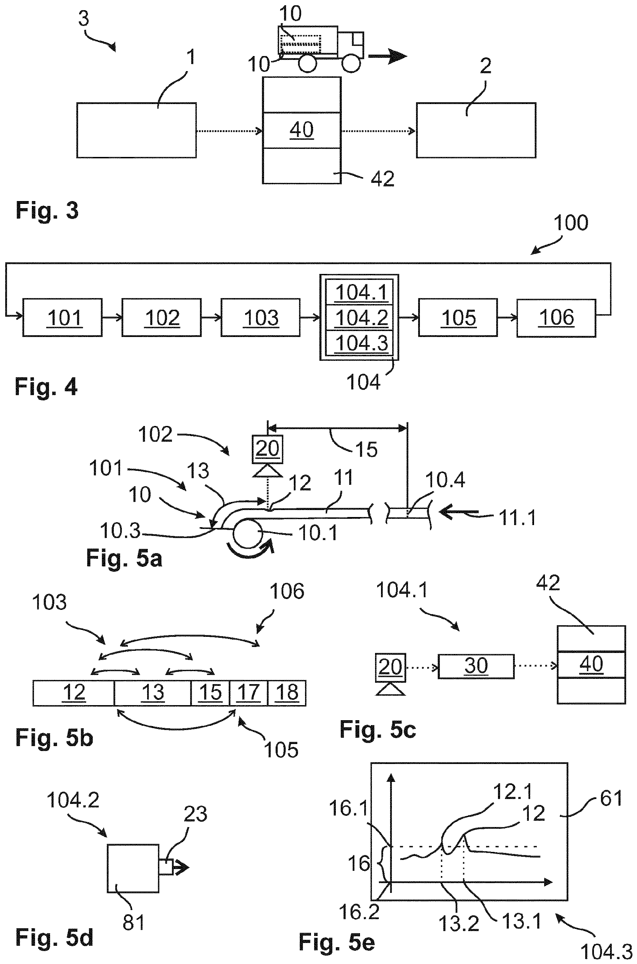

Figur 3 zeigt eine schematische Darstellung eines erfindungsgemäßen Verarbeitungssystems 3 zur Verarbeitung eines Bahnmaterials 11 in schematischer Darstellung. Dabei ist eine Aufwickelvorrichtung 1 vorgesehen, die vorzugsweise gemäß der Aufwickelvorrichtung des Ausführungsbeispiels der Figur 1 ausgestaltet sein kann. Ferner umfasst das Verarbeitungssystem 3 eine Abwickelvorrichtung 2, die vorzugsweise gemäß dem Ausführungsbeispiel der Figur 2 ausgestaltet sein kann. Durch die Aufwickelvorrichtung 1 kann dabei das Bahnmaterial 11 zu einem Wickel 10 gewickelt werden, welcher daraufhin zur Abwickelvorrichtung 2 transportiert wird. Dies kann innerhalb einer Halle durchgeführt werden oder einen Vertriebsweg umfassen, welcher beispielsweise die Lieferung an einen Kunden umfasst, der das Bahnmaterial 11 des Wickel 10 weiter verarbeiten möchte. Zu dem Wickel 10 ist ferner ein externer Server 42 vorgesehen, welcher eine Datenbank 40 aufweist, die einen Korrelation einer Unregelmäßigkeit 12 zu einem Laufparameter 13 des Wickels 10 speichert. Sowohl die Aufwickelvorrichtung 1, als auch die Abwickelvorrichtung 2 sind dabei mit dem externen Server 42 verbunden, um zum einen die Daten zur Verfügung zu stellen und zum anderen die Daten abrufen zu können. Zusätzlich oder alternativ zum externen Server 42 kann dabei vorgesehen sein, dass die Daten beispielsweise mit der Lieferung des Wickels 10 auf einer mobilen Speichereinheit 43 und/oder einem Informationsträger 23 zur Verfügung gestellt werden.

Figur 4 zeigt ein erfindungsgemäßes Überwachungsverfahren 100 zur Überwachung eines Aufwickelprozesses an einer Aufwickelvorrichtung 1. Dabei umfasst das Überwachungsverfahren 100 ein zumindest teilweises Aufwickeln 101 eines Bahnmaterials 11 zu einem Wickel 10. Das zumindest teilweise Aufwickeln 101 ist dabei in Figur 5a näher dargestellt. Dabei wird ein zunächst flach sich erstreckendes Bahnmaterial 11 um eine Wickelhülse 10.1 gewickelt, so dass das Bahnmaterial 11 portioniert wird und damit verkaufbar bzw. transportierbar ist. Insbesondere während des Aufwickelns 101 ist dabei ein Erfassen 102 vorgesehen, welches gemäß Figur 5a durch eine Erfassungseinheit 20 durchgeführt werden kann. Die Unregelmäßigkeit 12 kann dabei z. B. das Fehlen eines Druckbildes auf dem Bahnmaterial 11 umfassen. So kann die Erfassungseinheit 20 beispielsweise als Kamera ausgestaltet sein, um die Unregelmäßigkeit 12 optisch zu erfassen. Während des Aufwickelns 101 kann dabei ferner insbesondere kontinuierlich ein Laufparameter 13 erfasst werden. Der Laufparameter 13 kann dabei eine bereits aufgewickelte Länge des Bahnmaterials 11 von einem Wickelanfang 10.3 bis zur Position der Unregelmäßigkeit 12 bzw. des Laufparameters 13 umfassen. Insbesondere kann auf den Laufparameter 13 durch Erfassung eines Rücklaufparameters 15, als z.B. einer Länge von einem Wickelende 10.4 des Bahnmaterials 11 bis zur Position der Unregelmäßigkeit 12 bzw. des Laufparameters 13, geschlossen werden. Das Überwachungsverfahren 100 umfasst ferner ein Bestimmen 103 einer Korrelation zwischen der Unregelmäßigkeit 12 und zumindest einem Laufparameter 13 des Wickels 10. Dabei kann beispielsweise die Korrelation durch eine Zuordnung des Laufparameters 13 zur Unregelmäßigkeit 12 erfolgen. Eine derartige Zuordnung in Form einer Tabellenzeile ist in Figur 5b dargestellt. Zudem erfolgt im Rahmen des Überwachungsverfahrens 100 ein Bereitstellen 104 der Korrelation zwischen der Unregelmäßigkeit 12 des Bahnmaterials 11 und dem Laufparameter 13 des Wickels 10 für einen Abwickelprozess. Dabei kann das Bereitstellen 104 der Korrelation ein Eintragen 104.1 der Unregelmäßigkeit 12 zu dem Laufparameter 13 in eine Datenbank 40 umfassen, wie dies in Figur 5c schematisch dargestellt ist. Dabei wird die Unregelmäßigkeit 12 über eine Erfassungseinheit 20 erfasst, an eine Recheneinheit 30 gemeldet, welche die Korrelation der Unregelmäßigkeit 12 zu dem Laufparameter 13 in eine Datenbank 40 einträgt, wobei die Datenbank 40 auf einem externen Server 42 vorgesehen sein kann. Zusätzlich oder alternativ kann die Datenbank 40 auf einer mobile Speichereinheit 43 vorgesehen sein. Zusätzlich oder alternativ kann das Bereitstellen 104 der Korrelation ein Erstellen 104.2 eines wickelspezifischen Informationsträgers 23 umfassen, wie dies in Figur 5d dargestellt ist. Dabei wird der Informationsträger 23 durch eine Bereitstellungseinheit 81 zur Verfügung gestellt. So kann der Informationsträger 23 beispielsweise einen Barcode umfassen, welcher durch die Bereitstellungseinheit 81 gedruckt wird oder einen RFID-Chip, welcher durch die Bereitstellungseinheit 81 erstellt wird. Zusätzlich oder alternativ kann das Bereitstellen 104 der Korrelation ein Visualisieren 104.3 der Korrelation der Unregelmäßigkeit 12 zu dem Laufparameter 13 an der Aufwickelvorrichtung 1 umfassen. Dies ist beispielhaft in Figur 5e dargestellt, wobei die Unregelmäßigkeit 12 und der Laufparameter 13 einander zuordbar auf einem Display 61 der Aufwickelvorrichtung 1 visualisiert werden. Dadurch kann ein Benutzer die Daten einsehen und die Zuordnung, d. h. die Korrelation direkt erkennen. Wie dargestellt, kann ein Parameterbereich 16 vorgesehen sein, welcher durch zumindest eine Parametergrenze 16.1, vorzugsweise durch zwei Parametergrenzen 16.1, 16.2 definiert ist. Übersteigt der Prozessparameter dabei eine erste Parametergrenze 16.1 bzw. unterschreitet eine zweite Parametergrenze 16.2, wird eine Unregelmäßigkeit 12 angenommen. Dabei können auch mehrere Unregelmäßigkeiten 12, 12.1 mit mehreren Werten 13.1, 13.2 des Laufparameters 13 oder mehreren Laufparametern jeweils in Korrelation gebracht sein und grafisch dargestellt sein.

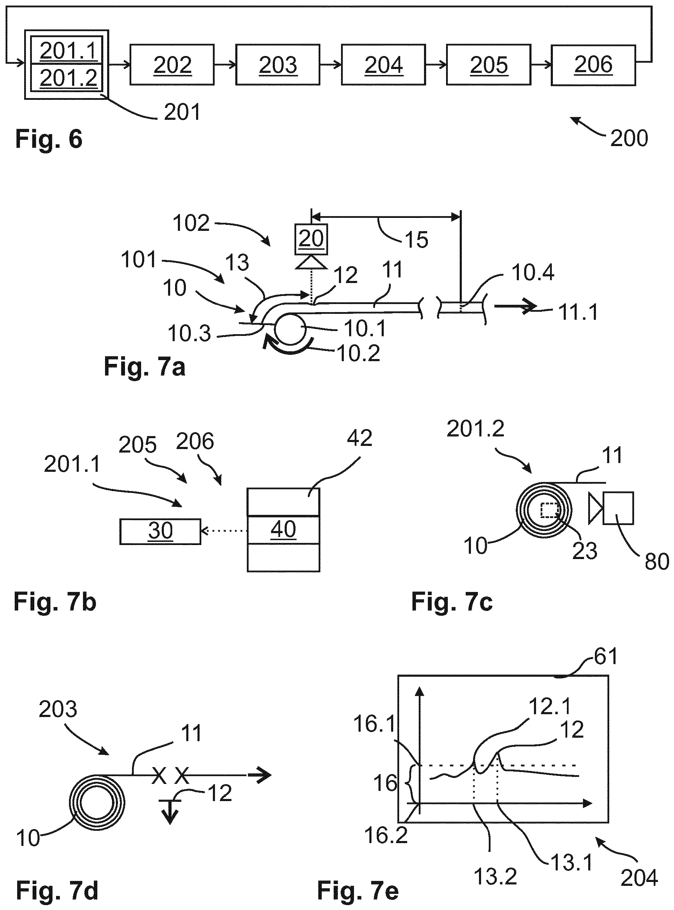

Figur 6 zeigt ferner ein erfindungsgemäßes Steuerverfahren 200 zur Durchführung eines Abwickelprozesses an einer Abwickelvorrichtung 2. Dabei umfasst das Steuerverfahren 200 ein Beziehen 201 einer Korrelation einer Unregelmäßigkeit 12 eines Bahnmaterials 11 zu zumindest einem Laufparameter 13 des Wickels 10 von einem Abwickelprozess. Dabei kann das Beziehen 201 der Korrelation ein Auslesen 201.1 der Unregelmäßigkeit 12 eines Laufparameters 13 aus einer Datenbank 40 umfassen. Dies ist exemplarisch in Figur 7b dargestellt, wobei eine Datenbank 40 auf einem externen Server 42 vorgesehen sein kann, deren Daten durch einen Zugriff auf den externen Server 42 abgerufen werden, insbesondere indem eine Recheneinheit 30 das Auslesen 201.1 durchführt. Das Steuerverfahren 200 umfasst ferner ein zumindest teilweises Abwickeln 202 des Bahnmaterials 11 von dem Wickel 10, wie beispielhaft in Figur 7a dargestellt. Dabei wird das Bahnmaterial 11 vom Wickel 10 durch ein Antriebsmittel 50 gezogen oder der Wickel 10 wird gedreht, so dass das Bahnmaterial 11 eine flache Erstreckung beim Abwickeln aufweist. Zusätzlich oder alternativ zum Beziehen 201 der Korrelation durch Auslesen 201.1 aus der Datenbank 40, kann ferner gemäß Figur 7c vorgesehen sein, dass eine Bezugsschnittstelle 80 ein Erkennungsmittel zum Auslesen 201.2 eines Informationsträgers 23 aufweist. Dabei kann der Informationsträger 23 beispielsweise am Wickel 10 angeordnet sein. Ferner umfasst das Steuerverfahren 200 ein Durchführen 203 einer Reaktionsmaßnahme in Reaktion auf die Unregelmäßigkeit 12, wenn eine Position des Bahnmaterials 11 auf Basis der Korrelation der Unregelmäßigkeit 12 zu dem Laufparameter 13 durch das Abwickeln des Bahnmaterials 11 erreicht ist. Insbesondere kann die Reaktionsmaßnahme dabei ein Ausschneiden der Unregelmäßigkeit 12 mit einem Teilstück des Bahnmaterials 11 umfassen, wie in Figur 7d dargestellt. Dadurch kann fehlerhaftes Material entfernt werden und damit der Prozess mit dem nicht fehlerhaften Material weiter verfolgt werden. Zusätzlich oder alternativ kann ein Stoppen der Abwickelvorrichtung 2 als Reaktionsmaßnahme vorgesehen sein. Ferner kann das Steuerverfahren 200 ein Visualisieren 204 der Korrelation zwischen der Unregelmäßigkeit 12 und dem laufenden Laufparameter 13 an der Abwickelvorrichtung 2 umfassen, wie in Figur 7e gezeigt. Dies kann beispielsweise ein Darstellen der Unregelmäßigkeit 12 zu dem Laufparameter 13 an einem Display 61 umfassen, so dass die Zuordnung der Unregelmäßigkeit 12 zu dem Laufparameter 13 eindeutig ist. Dadurch kann der Bediener die Korrelation sehen und ggf. die Bedienung in der Abwickelvorrichtung 2 anpassen. Ferner ist im Rahmen des dargestellten Ausführungsbeispiels des Steuerverfahrens 200 ein Beziehen 205 einer Materialbeschaffenheit 17 des Bahnmaterials 11 und ein Beziehen 206 einer Relativposition 18 des Bahnmaterials zu einer Referenzposition am Wickel 10. Dies kann insbesondere gleichzeitig mit dem Beziehen 201 der Korrelation zwischen der Unregelmäßigkeit 12 und dem Laufparameter 13 durchgeführt werden, wie in Figur 7b dargestellt. Dadurch können dem Abwickelprozess weitere Parameter zur Verfügung gestellt werden, um diesen entsprechend besser durchführen zu können bzw. den Wickel 10 besser handhaben zu können. Insbesondere kann mit dem Steuerverfahren 200 und/oder einzelnen Verfahrensschritten des Steuerverfahrens 200 auch ein Quantifizierungsverfahren zur Bestimmung einer Anzahl aus dem Bahnmaterial 11 produzierter Produkte durchführbar sein.

Figur 8 zeigt ferner ein Verarbeitungsverfahren 300 zur Durchführung eines Verarbeitungsprozesses eines Bahnmaterials 11, wobei ein Durchführen eines Überwachungsverfahrens 100 vorgesehen ist, bei dem ein Aufwickelprozess überwacht wird. Dabei wird eine Korrelation zwischen einer Unregelmäßigkeit 12 und einem Laufparameter 13 in Bezug auf einen Wickel 10 bereitgestellt und gemäß einem Verfahrensschritt 301 an eine Abwickelvorrichtung 2 übertragen. Dies kann beispielsweise das Speichern auf einem externen Server 42 umfassen. Das Überwachungsverfahren 100 kann vorzugsweise dem Überwachungsverfahren der Figur 4 bzw. der Figur 5 entsprechen. Nach dem Übertragen 301 der Korrelation wird ferner ein Steuerverfahren 200 ausgeführt zur Durchführung eines Abwickelprozesses an der Abwickelvorrichtung 2. Das Steuerverfahren 200 kann dabei vorzugsweise gemäß dem Ausführungsbeispiel der Figuren 6 bzw. 7 ausgeführt werden. Dadurch kann die gesamte Lieferkette zwischen Aufwickeln eines Bahnmaterials 11 und Abwickeln eines Bahnmaterials 11 verbessert sein, da beide Prozesse über relevante Daten verfügen, insbesondere wobei der Aufwickelprozess dem Abwickelprozess Daten zur Verfügung stellen kann, welche bei der Handhabung eines bestimmten Wickels 10 nützlich sind.

Die Figuren 9a bis 9c zeigen weitere Arten von Unregelmäßigkeiten 12. So zeigt Figur 9a beispielsweise das Entstehen eines Risses im Bahnmaterial 11, der durch eine Erfassungseinheit 20 optisch erfassbar ist. So kann beispielsweise eine bestimmte Länge eines Risses tolerierbar sein und ab einer bestimmten Länge des Risses dieser als Unregelmäßigkeit 12 klassifiziert werden. Figur 9b zeigt ferner eine weitere mögliche Unregelmäßigkeit 12, wobei ein Antriebsmittel 50 Antriebsrollen 51 umfasst, welche für einen Vortrieb 11.1 des Bahnmaterials 11 sorgen. Wird durch eine Erfassungseinheit 20 beispielsweise festgestellt, dass ein Vorzugparameter 51.1 von einem Sollwert abweicht, kann ein erhöhter Schlupf an den Antriebsrollen 51 festgestellt werden damit eine Unregelmäßigkeit 12 definieren. Der Schlupf kann dabei z.B. eine Differenz aus einem tatsächlichen Vortrieb des Bahnmaterials 11 und dem Vorzugparameter 51.1 umfassen. Figur 9c zeigt ferner ein Öffnen eines Folienschlauches, wobei das Bahnmaterial 11 zumindest in einem mittleren Bereich in zwei Schichten vorgesehen ist, welche an den Außenseiten des Bahnmaterials 11 zusammenhängen. Um das Bahnmaterial 11 in Schlauchform zu bringen, kann dabei vorgesehen sein, dass Ansaugmittel 52 eine Oberfläche des Bahnmaterials 11 jeweils ansaugen und auseinanderziehen, so dass der Schlauch aus dem zuvor flachen Bahnmaterial 11 entsteht. Durch bestimmte Ereignisse innerhalb des Prozesses kann es vorkommen, dass eine Ansaugkraft nicht ausreicht und das Bahnmaterial 11 beispielsweise Verblockungen aufweist. Dadurch kann es durch die Ansaugmittel 52 nicht möglich sein, das Bahnmaterial 11 an einer bestimmten Stelle zu öffnen, wobei hier mehrere Ansaugversuche vorgesehen sein können. Auch mehrere Ansaugversuche können dabei als Unregelmäßigkeit klassifiziert sein und an eine Recheneinheit 30 gemeldet werden. So kann durch die Erfassungseinheit 20 beispielsweise eine Kraftmessung der Ansaugmittel 52 vorgesehen sein, wobei bei einer erhöhten Kraft oder bei einem plötzlichen Kraftabfall dies durch die Recheneinheit 30 als Unregelmäßigkeit erfasst werden kann.

Die voranstehende Erläuterung der Ausführungsform beschreibt die vorliegende Erfindung ausschließlich im Rahmen von Beispielen. Selbstverständlich können einzelnen Merkmale der Ausführungsform, sofern technisch sinnvoll, fein miteinander kombiniert werden, ohne den Rahmen der vorliegenden Erfindung zu verlassen. Insbesondere kann auch ein Quantifizierungsverfahren zur Bestimmung einer Anzahl aus einem Bahnmaterial produzierter Produkte mit einzelnen oder sämtlichen Merkmalen der Ausführungsformen, sofern technisch sinnvoll, kombiniert werden.

### Bezugszeichenliste

- 1: Aufwickelvorrichtung
- 2: Abwickelvorrichtung
- 3: Verarbeitungssystem
- 4: Herstelleinheit

- 10: Wickel
- 10.1: Wickelhülse
- 10.2: Umdrehung
- 10.3: Wickelanfang
- 10.4: Wickelende
- 11: Bahnmaterial
- 12: Unregelmäßigkeit
- 13: Laufparameter

- 15: Rücklaufparameter
- 16: Parameterbereich
- 16.1: erste Parametergrenze
- 16.2: zweite Parametergrenze
- 17: Materialbeschaffenheit
- 18: Relativposition

- 20: Erfassungseinheit
- 21: Messeinheit
- 22: Positionsermittlungseinheit
- 23: Informationsträger
- 24: Messeinheit

- 30: Recheneinheit
- 31: Kommunikationsschnittstelle
- 32: Kontrolleinheit
- 33: Kommunikationsschnittstelle

- 40: Datenbank
- 42: externer Server
- 43: mobile Speichereinheit
- 50: Antriebsmittel
- 51: Antriebsrolle
- 52: Ansaugmittel
- 53: Antriebsmittel

- 60: Ausgabeeinheit
- 61: Display
- 62: Leuchtmittel
- 63: Lautsprecher

- 70: Wickelhalterung
- 71: Hülsenhalterung

- 80: Bezugsschnittstelle
- 81: Bereitstellungseinheit

- 100: Überwachungsverfahren
- 101: zumindest teilweises Aufwickeln
- 102: Erfassen von 12
- 103: Bestimmen einer Korrelation
- 104: Bereitstellen der Korrelation
- 104.1: Eintragen der Unregelmäßigkeit
- 104.2: Erstellung von 23
- 104.3: Visualisieren der Korrelation
- 105: Bereitstellen einer Materialbeschaffenheit
- 106: Bereitstellen einer Relativposition

- 200: Steuerverfahren
- 201: Beziehen einer Korrelation
- 201.1: Auslesen aus 40
- 201.2: Auslesen von 23
- 202: zumindest teilweises Abwickeln
- 203: Durchführen einer Reaktionsmaßnahme
- 204: Visualisieren der Korrelation
- 205: Beziehen einer Materialbeschaffenheit
- 206: Beziehen einer Relativposition

- 300: Verarbeitungsverfahren
- 301: Übertragen

## Patentansprüche

1. Überwachungsverfahren (100) zur Überwachung eines Aufwickelprozesses an einer Aufwickelvorrichtung (1), umfassend die folgenden Schritte:
- Zumindest teilweises Aufwickeln (101) eines Bahnmaterials (11), das eine Kunststofffolie umfasst, zu einem Wickel (10),
- Erfassen (102) zumindest einer Unregelmäßigkeit (12) des Bahnmaterials (11),
- Bestimmen (103) einer Korrelation der Unregelmäßigkeit (12) zu zumindest einem Laufparameter (13) des Wickels (10), wobei der Laufparameter (13) die tatsächlich aufgewickelte Länge des Bahnmaterials (11) auf dem Wickel (10) bis zum Auftreten der Unregelmäßigkeit (12) umfasst,
- Bereitstellen (104) der Korrelation der Unregelmäßigkeit (12) des Bahnmaterials (11) zu dem Laufparameter (13) des Wickels (10) für einen Abwickelprozess,
wobei der Laufparameter (13) durch Erfassung eines Vorzugparameters (51.1) des Bahnmaterials (11) bestimmt wird,
wobei der Vorzugparameter (51.1) eine Geschwindigkeit am Vorzug umfasst,
wobei der Vorzug ein Teil eines Antriebsmittels (53) ist, welcher am Bahnmaterial (11) wirkt, um dem Bahnmaterial (11) einen Vortrieb zu ermöglichen.

2. Überwachungsverfahren (100) nach Anspruch 1,
**dadurch gekennzeichnet,**
**dass** der Laufparameter (13) des Wickels (10) insbesondere kontinuierlich während des Aufwickelns (101) des Bahnmaterials (11) bestimmt wird.

3. Überwachungsverfahren (100) nach Anspruch 1 oder 2,
**dadurch gekennzeichnet,**
**dass** zusätzlich eine Messung einer Umdrehungszahl (11.2) des Wickels (10) durchgeführt wird.

4. Überwachungsverfahren (100) nach einem der vorhergehenden Ansprüche,
**dadurch gekennzeichnet,**
**dass** das Bereitstellen (104) der Korrelation der Unregelmäßigkeit (12) zu dem Laufparameter (13) folgenden Schritt umfasst:
- Eintragen (104.1) der Korrelation der Unregelmäßigkeit (12) zu dem Laufparameter (13) in eine Datenbank (40), wobei insbesondere das Eintragen der Korrelation der Unregelmäßigkeit (12) zu dem Laufparameter (13) in die Datenbank (40) einen Zugriff auf einen externen Server (42) und/oder eine mobile Speichereinheit (43) umfasst.

5. Überwachungsverfahren (100) nach einem der vorhergehenden Ansprüche,
**dadurch gekennzeichnet,**
**dass** das Bereitstellen (104) der Korrelation der Unregelmäßigkeit (12) zu dem Laufparameter (13) folgenden Schritt umfasst:
- Erstellen (104.2) eines wickelspezifischen Informationsträgers (23), insbesondere wobei der Informationsträger (23) am Wickel (10) angeordnet wird, und/oder
**dass** das Bereitstellen (104) der Korrelation der Unregelmäßigkeit (12) zu dem Laufparameter (13) folgenden Schritt umfasst:
- Visualisieren (104.3) der Korrelation der Unregelmäßigkeit (12) zu dem Laufparameter (13) an der Aufwickelvorrichtung (1).

6. Überwachungsverfahren (100) nach einem der vorhergehenden Ansprüche,
**dadurch gekennzeichnet,**
**dass** das Überwachungsverfahren (100) ferner zumindest einen der folgenden Schritte umfasst:
- Bereitstellen (105) einer Materialbeschaffenheit (17) des Bahnmaterials (11),
- Bereitstellen (106) einer Relativposition (18) des Bahnmaterials (11) zu einer Referenzposition am Wickel (10).

7. Steuerverfahren (200) zur Durchführung eines Abwickelprozesses an einer Abwickelvorrichtung (2), umfassend die folgenden Schritte:
- Zumindest teilweises Abwickeln (202) eines Bahnmaterials (11), das eine Kunststofffolie umfasst, von einem Wickel (10),
- Beziehen (201) einer Korrelation einer Unregelmäßigkeit (12) des Bahnmaterials (11) zu zumindest einem Laufparameter (13) des Wickels (10) von einem Aufwickelprozess, wobei der Laufparameter (13) die tatsächlich aufgewickelte Länge des Bahnmaterials (11) auf dem Wickel (10) bis zum Auftreten der Unregelmäßigkeit (12) umfasst,
- Durchführen (203) einer Reaktionsmaßnahme in Reaktion auf die Unregelmäßigkeit (12), wenn eine Position des Bahnmaterials (11) auf Basis der Korrelation der Unregelmäßigkeit (12) zu dem Laufparameter (13) beim Abwickeln (202) des Bahnmaterials (11) erreicht ist,
wobei die Position des Laufparameters (13) durch Erfassung eines Vorzugparameters (51.1) des Bahnmaterials (11) bestimmt wird,
wobei der Vorzugparameter (51.1) eine Geschwindigkeit am Vorzug umfasst,
wobei der Vorzug ein Teil eines Antriebsmittels (53) ist, welcher am Bahnmaterial (11) wirkt, um dem Bahnmaterial (11) einen Vortrieb zu ermöglichen.

8. Steuerverfahren (200) nach Anspruch 7,
**dadurch gekennzeichnet,**
**dass** das Beziehen (201) der Korrelation der Unregelmäßigkeit (12) zu dem Laufparameter (13) folgenden Schritt umfasst:
- Auslesen (201.1) der Korrelation der Unregelmäßigkeit (12) zu dem Laufparameter (13) aus einer Datenbank (40), und/oder dass das Auslesen (201.1) der Korrelation der Unregelmäßigkeit (12) zu dem Laufparameter (13) aus der Datenbank (40) einen Zugriff auf einen externen Server (42) und/oder eine mobile Speichereinheit (43) umfasst.

9. Steuerverfahren (200) nach einem der vorhergehenden Ansprüche,
**dadurch gekennzeichnet,**
**dass** das Beziehen (201) der Korrelation der Unregelmäßigkeit (12) zu dem Laufparameter (13) folgenden Schritt umfasst:
- Auslesen (201.2) eines wickelspezifischen Informationsträgers (23), insbesondere wobei der Informationsträger (23) am Wickel (10) angeordnet ist.

10. Steuerverfahren (200) nach einem der vorhergehenden Ansprüche,
**dadurch gekennzeichnet,**
**dass** das Steuerverfahren (200) folgenden Schritt umfasst:
- Visualisieren (204) der Korrelation der Unregelmäßigkeit (12) zu dem Laufparameter (13) an der Abwickelvorrichtung (2).

11. Steuerverfahren (200) nach einem der vorhergehenden Ansprüche,
**dadurch gekennzeichnet,**
**dass** ein Rücklaufparameter (15) des Wickels (10) insbesondere kontinuierlich während des zumindest teilweisen Abwickelns (202) des Bahnmaterials (11) bestimmt wird, wobei der Rücklaufparameter (15) zu dem Laufparameter (13) in Relation gebracht wird, und/oder dass die Reaktionsmaßnahme ein Ausschneiden eines Teilstückes des Bahnmaterials (11) in einem Bereich der Unregelmäßigkeit (12) und/oder, dass die Reaktionsmaßnahme ein Stoppen der Abwickelvorrichtung (2) umfasst..

12. Steuerverfahren (100) nach einem der vorhergehenden Ansprüche,
**dadurch gekennzeichnet,**
**dass** eine Messung einer Umdrehungszahl (11.2) des Wickels (10) durchgeführt wird.

13. Steuerverfahren (200) nach einem der vorhergehenden Ansprüche,
**dadurch gekennzeichnet,**
**dass** das Steuerverfahren (200) ferner zumindest einen der folgenden Schritte umfasst:
- Beziehen (205) einer Materialbeschaffenheit (17) des Bahnmaterials (11),
- Beziehen (206) einer Relativposition (18) des Bahnmaterials (11) zu einer Referenzposition am Wickel (10).

14. Steuerverfahren (200) nach einem der vorhergehenden Ansprüche,
**dadurch gekennzeichnet,**
**dass** auf Basis des Laufparameters (13) und/oder des Rücklaufparameters (15) eine Anzahl von aus dem Bahnmaterial (11) produzierten Produkten bestimmt wird.

15. Verarbeitungsverfahren (300) zur Durchführung eines Verarbeitungsprozesses eines Bahnmaterials (11), aufweisend die folgenden Schritte:
- Durchführen eines Überwachungsverfahrens (100) nach einem der Ansprüche 1 bis 6 zur Überwachung eines Aufwickelprozesses an einer Aufwickelvorrichtung (1),
- Ausführen eines Steuerverfahrens (200) nach einem der Ansprüche 7 bis 14 zur Durchführung eines Abwickelprozesses an einer Abwickelvorrichtung (2).

16. Aufwickelvorrichtung (1) zur Durchführung eines Aufwickelprozesses eines eine Kunststofffolie aufweisenden Bahnmaterials (11) zu einem Wickel (10), aufweisend eine Hülsenhalterung (71), auf welcher eine Wickelhülse (10.1) zum Aufwickeln des Bahnmaterials (11) während des Aufwickelprozesses lagerbar ist,
eine Erfassungseinheit (20), durch welche zumindest eine Unregelmäßigkeit (12) des Bahnmaterials (11) erfassbar ist,
und eine Bereitstellungseinheit (81) zum Bereitstellen einer Korrelation der Unregelmäßigkeit (12) zu einem Laufparameter (13) des Wickels (10) für einen Abwickelprozess,
wobei eine Kontrolleinheit (32) vorgesehen ist, durch welche ein Überwachungsverfahren (100) nach einem der Ansprüche 1 bis 6 ausführbar ist.

17. Abwickelvorrichtung (2) zur Durchführung eines Abwickelprozesses eines eine Kunststofffolie aufweisenden Bahnmaterials (11) von einem Wickel (10), aufweisend eine Wickelhalterung (70), auf welcher der Wickel (10) während des Abwickelprozesses lagerbar ist,
eine Bezugsschnittstelle (80) zum Beziehen einer Korrelation einer Unregelmäßigkeit (12) des Bahnmaterials (11) zu einem Laufparameter (13) des Wickels (10),
und eine Positionsermittlungseinheit (22), durch welche eine Abwicklung des Bahnmaterials (11) während des Abwickelprozesses überwachbar ist, so dass eine Reaktionsmaßnahme in Reaktion auf die Unregelmäßigkeit (12) durchführbar ist, wenn eine Position des Bahnmaterials (11) auf Basis der Korrelation der Unregelmäßigkeit (12) zu dem Laufparameter (13) im Abwickelprozess erreicht ist,
wobei eine Recheneinheit (30) vorgesehen ist, durch welche ein Steuerverfahren (200) nach einem der Ansprüche 7 bis 14 ausführbar ist.

18. Verarbeitungssystem (3) zur Verarbeitung eines Bahnmaterials (11), aufweisend
eine Aufwickelvorrichtung (1) nach Anspruch 16 und eine Abwickelvorrichtung (2) nach Anspruch 17.

## Claims

1. A monitoring method (100) for monitoring a winding process on a winding device (1), comprising the following steps:
- At least partial winding (101) of a web material (11), that comprises a plastic film, to form a winding (10),
- detection (102) of at least one irregularity (12) of the web material (11),
- determination (103) of a correlation of the irregularity (12) to at least one running parameter (13) of the winding (10), wherein the running parameter (13) comprises the actual wound length of the web material (11) on the winding (10) up to the occurrence of the irregularity (12),
- provision (104) of the correlation of the irregularity (12) of the web material (11) to the running parameter (13) of the winding (10) for an unwinding process,
wherein the running parameter (13) is determined by detection of a preferred parameter (51.1) of the web material (11),
wherein the preferred parameter (51.1) comprises the speed at the preference,
wherein the preference is a part of a drive means (53) which acts on the web material (11), in order to allow an advancing of the web material (11).

2. The monitoring method (100) according to claim 1,
**characterized in**
**that** the running parameter (13) of the winding (10) is determined in particular continuously during the winding (101) of the web material (11).

3. The monitoring method (100) according to claim 1 or 2,
**characterized in**
**that** a measurement of a speed (11.2) of the winding (10) is also performed.

4. The monitoring method (100) according to any one of the preceding claims,
**characterized in**
**that** the provision (104) of the correlation of the irregularity 12) to the running parameter (13) comprises the following step:
- Entry (104.1) of the correlation of the irregularity (12) to the running parameter (13) into a database (40), wherein in particular the entry of the correlation of the irregularity (12) to the running parameter (13) into the data base (40) comprises an access to an external server (42) and/or a mobile storage unit (43).

5. The monitoring method (100) according to any one of the preceding claims,
**characterized in**
**that** the provision (104) of the correlation of the irregularity (12) to the running parameter (13) comprises the following step:
- Creation (104.2) of a winding-specific information carrier (23), in particular wherein the information carrier (23) is arranged on the winding (10), and/or
**that** the provision (104) of the correlation of the irregularity (12) to the running parameter (13) comprises the following step:
- Visualization (104.3) of the correlation of the irregularity (12) to the running parameter (13) on the winding device (1).

6. The monitoring method (100) according to any one of the preceding claims,
**characterized in**
**that** the monitoring method (100) also comprises at least one of the following steps:
- Provision (105) of a material composition (17) of the web material (11),
- provision (106) of a relative position (18) of the web material (11) with respect to a reference position on the winding (10).

7. A control method (200) for carrying out an unwinding process on an unwinding device (2), comprising the following steps:
- At least partial unwinding (202) of a web material (11), that comprises a plastic film, from a winding (10),
- obtaining (201) a correlation of an irregularity (12) of the web material (11) to at least one running parameter (13) of the winding (10) from a winding process, wherein the running parameter (13) comprises the actually wound length of the web material (11) on the winding (10) up to the occurrence of the irregularity (12),
- carrying out (203) a reaction measure in reaction to the irregularity (12), when a position of the web material (11) is reached on the basis of the correlation of the irregularity (12) to the running parameter (13) during the unwinding (202) of the web material (11).
wherein the position of the running parameter (13) is determined by detection of a preferred parameter (51.1) of the web material (11),
wherein the preferred parameter (51.1) comprises a velocity at the preference,
wherein the preference is a part of a drive means (53), which acts on the web material (11), in order to allow an advancing of the web material (11).

8. The control method (200) according to claim 7,
**characterized in**
**that** obtaining (201) the correlation of the irregularity (12) to the running parameter (13) comprises the following step:
- Reading out (201.1) the correlation of the irregularity (12) to the running parameter (13) from a database (40), and/or that the reading out (201.1) of the correlation of the irregularity (12) to the running parameter (13) from the database (40) comprises an access to an external server (42) and/or a mobile storage unit (43).

9. The control method (200) according to any one of the preceding claims,
**characterized in**
**that** obtaining (201) the correlation of the irregularity (12) to the running parameter (13) comprises the following step:
- Reading out (201.2) a winding-specific information carrier (23), in particular wherein the information carrier (23) is arranged on the winding (10).

10. The control method (200) according to any one of the preceding claims,
**characterized in**
**that** the control method (200) comprises the following step:
- Visualization (204) of the correlation of the irregularity (12) to the running parameter (13) on the unwinding device (2).

11. The control method (200) according to any one of the preceding claims,
**characterized in**
**that** a return parameter (15) of the winding (10) is determined in particular continuously during the at least partial unwinding (202) of the web material (11), wherein the return parameter (15) is brought into relation with the running parameter (13), and/or that the reaction measure comprises a cutting out of a section of the web material (11) in a region of the irregularity (12) and/or, that the reaction measure comprises stopping the unwinding device (2).

12. The control method (200) according to any one of the preceding claims,
**characterized in**
**that** a measurement of the speed (11.2) of the winding (10) is performed.

13. The control method (200) according to any one of the preceding claims,
**characterized in**
**that** the control method (200) also comprises at least one of the following steps:
- Obtaining (205) a material composition (17) of the web material (11),
- obtaining (206) a relative position (18) of the web material (11) with respect to a reference position on the winding (10).

14. The control method (200) according to any one of the preceding claims,
**characterized in**
**that** a number of products produced from the web material (11) is determined on the basis of the running parameter (13) and/or the return parameter (15).

15. A processing method (300) for carrying out a processing process of a web material (11), having the following steps:
- Carrying out a monitoring method (100) according to any one of claims 1 to 6 for monitoring a winding process on a winding device (1),
- carrying out a control method (200) according to any one of claims 7 to 14 for implementing an unwinding process on an unwinding device (2).

16. A winding device (1) for carrying out a winding process of a web material (11) having a plastic film to form a winding (10), having
a sleeve holder (71), on which a winding sleeve (10.1) for winding the web material (11) can be stored during the winding process,
a detection unit (20), by means of which at least one irregularity (12) of the web material (11) can be detected,
and a provisioning unit (81) for providing a correlation of the irregularity (12) to a running parameter (13) of the winding (10) for an unwinding process,
wherein a control unit (32) is provided, by means of which a monitoring method (100) according to any one of claims 1 to 6 can be carried out.

17. An unwinding device (2) for carrying out an unwinding process of a web material (11) having a plastic film from a winding (10), having
a winding holder (70), on which the winding (10) can be stored during the unwinding process,
a reference interface (80) for obtaining a correlation of an irregularity (12) of the web material (11) to a running parameter (13) of the winding (10),
and a position-determining unit (22), by means of which an unwinding of the web material (11) can be monitored during the unwinding process, so that a reaction measure in reaction to the irregularity (12) can be carried out, if a position of the web material (11) is reached on the basis of the correlation of the irregularity (12) to the running parameter (13) in the unwinding process,
wherein a computer unit (30) is provided, by means of which a control method (200) can be carried out according to any one of claims 7 to 14.

18. A processing system (3) for processing a web material (11) having a winding device (1) according to claim 16 and an unwinding device (2) according to claim 17.

## Revendications

1. Procédé de surveillance (100) pour la surveillance d'un processus d'enroulement sur un dispositif d'enroulement (1), comprenant les étapes suivantes :
- enroulement (101) au moins partiel d'un matériau en forme de bande (11) qui comprend un film de matière plastique, afin d'obtenir une bobine (10),
- détection (102) d'au moins une irrégularité (12) du matériau en forme de bande (11),
- détermination (103) d'une corrélation de l'irrégularité (12) avec au moins un paramètre de marche (13) de la bobine (10), dans lequel le paramètre de marche (13) comprend la longueur effectivement enroulée du matériau en forme de bande (11) sur la bobine (10) jusqu'à l'apparition de l'irrégularité (12),
- mise à disposition (104) de la corrélation de l'irrégularité (12) du matériau en forme de bande (11) avec le paramètre de marche (13) de la bobine (10) pour un processus de déroulement,
dans lequel le paramètre de marche (13) est déterminé par la détection d'un paramètre de pré-étirage (51.1) du matériau en forme de bande (11),
dans lequel le paramètre de pré-étirage (51.1) comprend une vitesse au niveau du pré-étirage,
dans lequel le pré-étirage est une partie d'un moyen d'entraînement (53) qui agit sur le matériau en forme de bande (11) afin de permettre une avance du matériau en forme de bande (11).

2. Procédé de surveillance (100) selon la revendication 1,
**caractérisé en ce que**
le paramètre de marche (13) de la bobine (10) est déterminé plus particulièrement de manière continue pendant l'enroulement (101) du matériau en forme de bande (11).

3. Procédé de surveillance (100) selon la revendication 1 ou 2,
**caractérisé en ce que**
une mesure d'une vitesse de rotation (11.2) de la bobine (10) est en outre effectuée.

4. Procédé de surveillance (100) selon l'une des revendications précédentes, **caractérisé en ce que**
la mise à disposition (104) de la corrélation de l'irrégularité (12) avec le paramètre de marche (13) comprend l'étape suivante :
- entrée (104.1) de la corrélation de l'irrégularité (12) avec le paramètre de marche (13) dans une base de données (40), dans lequel, plus particulièrement l'entrée de la corrélation de l'irrégularité (12) avec le paramètre de marche (13) dans la base de données (40) comprend un accès à un serveur externe (42) et/ou une unité de mémoire mobile (43).

5. Procédé de surveillance (100) selon l'une des revendications précédentes, **caractérisé en ce que**
la mise à disposition (104) de la corrélation de l'irrégularité (12) avec le paramètre de marche (13) comprend l'étape suivante :
- création (104.2) d'un support d'information spécifique à la bobine (23), plus particulièrement dans lequel le support d'information (23) est disposé sur la bobine (10) et/ou
la mise à disposition (104) de la corrélation de l'irrégularité (12) avec le paramètre de marche (13) comprend l'étape suivante :
- visualisation (104.3) de la corrélation de l'irrégularité (12) avec le paramètre de marche (13) sur le dispositif d'enroulement (1).

6. Procédé de surveillance (100) selon l'une des revendications précédentes, **caractérisé en ce que**
le procédé de surveillance (100) comprend en outre au moins une des étapes suivantes :
- mise à disposition (105) d'une qualité de matériau (17) du matériau en forme de bande (11),
- mise à disposition (106) d'une position relative (18) du matériau en forme de bande (11) par rapport à une position de référence sur la bobine (10).

7. Procédé de commande (200) pour la réalisation d'un processus de déroulement sur un dispositif de déroulement (2), comprenant les étapes suivantes :
- déroulement (202) au moins partiel d'un matériau en forme de bande (11), qui comprend un film de matière plastique, à partir d'une bobine (10),
- réception (201) d'une corrélation d'une irrégularité (12) du matériau en forme de bande (11) avec au moins un paramètre de marche (13) de la bobine (10) à partir d'un processus d'enroulement, dans lequel le paramètre de marche (13) comprend la longueur effectivement enroulée du matériau en forme de bande (11) sur la bobine (10) jusqu'à l'apparition de l'irrégularité (12),
- application (203) d'une mesure de réaction en réponse à l'irrégularité (12), lorsqu'une position du matériau en forme de bande (11) est atteinte, sur la base de la corrélation de l'irrégularité (12) avec le paramètre de marche (13) lors du déroulement (202) du matériau en forme de bande (11),
dans lequel la position du paramètre de marche (13) est déterminée grâce à la détection d'un paramètre de pré-étirage (51.1) du matériau en forme de bande (11),
dans lequel le paramètre de pré-étirage (51.1) comprend une vitesse au niveau du pré-étirage,
dans lequel le pré-étirage est une partie d'un moyen d'entraînement (53) qui agit sur le matériau en forme de bande (11) afin de permettre l'avance du matériau en forme de bande (11).

8. Procédé de commande (200) selon la revendication 7,
**caractérisé en ce que**
la réception (201) de la corrélation de l'irrégularité (12) avec le paramètre de marche (13) comprend l'étape suivante :
- lecture (201.1) de la corrélation de l'irrégularité (12) avec le paramètre de marche (13) dans une base de données (40) et/ou la lecture (201.1) de la corrélation de l'irrégularité (12) avec le paramètre de marche (13) dans la base de données (40) comprend un accès à un serveur externe (42) et/ou à une unité de mémoire mobile (43).

9. Procédé de commande (200) selon l'une des revendications précédentes, **caractérisé en ce que**
la réception (201) de la corrélation de l'irrégularité (12) avec le paramètre de marche (13) comprend l'étape suivante :
- lecture (201.2) d'un support d'information spécifique à la bobine (23), plus particulièrement dans lequel le support d'information (23) est disposé sur la bobine (10).

10. Procédé de commande (200) selon l'une des revendications précédentes, **caractérisé en ce que**
le procédé de commande (200) comprend l'étape suivante :
- visualisation (204) de la corrélation de l'irrégularité (12) avec le paramètre de marche (13) sur le dispositif de déroulement (2).

11. Procédé de commande (200) selon l'une des revendications précédentes, **caractérisé en ce que**
un paramètre de marche arrière (15) de la bobine (10) est déterminé plus particulièrement de manière continue pendant le déroulement (202) au moins partiel du matériau en forme de bande (11), dans lequel le paramètre de marche arrière (15) est mis en relation avec le paramètre de marche (13) et/ou **en ce que** la mesure de réaction comprend une découpe d'une partie du matériau en forme de bande (11) au niveau de l'irrégularité (12) et/ou **en ce que** la mesure de réaction comprend un arrêt du dispositif de déroulement (2).

12. Procédé de commande (100) selon l'une des revendications précédentes, **caractérisé en ce que**
une mesure d'une vitesse de rotation (11.2) de la bobine (10) est effectuée.

13. Procédé de commande (200) selon l'une des revendications précédentes, **caractérisé en ce que**
le procédé de commande (200) comprend en outre au moins une des étapes suivantes :
- réception (205) d'une qualité de matériau (17) du matériau en forme de bande (11),
- réception (206) d'une position relative (18) du matériau en forme de bande (11) par rapport à une position de référence sur la bobine (10).

14. Procédé de commande (200) selon l'une des revendications précédentes, **caractérisé en ce que**
sur la base du paramètre de marche (13) et/ou du paramètre de marche arrière (15), est déterminé un nombre de produits fabriqués à partir du matériau en forme de bande (11).

15. Procédé de traitement (300) pour la réalisation d'un processus de traitement d'un matériau en forme de bande (11), comprenant les étapes suivantes :
- réalisation d'un procédé de surveillance (100) selon l'une des revendications 1 à 6 pour la surveillance d'un processus d'enroulement sur un dispositif d'enroulement (1),
- exécution d'un procédé de commande (200) selon l'une des revendications 7 à 14 pour l'exécution d'un processus de déroulement sur un dispositif de déroulement (2).

16. Dispositif d'enroulement (1) pour la réalisation d'un processus d'enroulement d'un matériau en forme de bande (11) comprenant un film de matière plastique afin d'obtenir une bobine (10), comprenant un support de mandrin (71) sur lequel un mandrin d'enroulement (10.1) peut être logé pour l'enroulement du matériau en forme de bande (11) pendant le processus d'enroulement,
une unité de détection (20) permettant de détecter au moins une irrégularité (12) du matériau en forme de bande (11),
et une unité de mise à disposition (81) pour la mise à disposition d'une corrélation de l'irrégularité (12) avec un paramètre de marche (13) de la bobine (10) pour un processus de déroulement,
dans lequel une unité de contrôle (32) est prévue, grâce à laquelle un procédé de surveillance (100) selon l'une des revendications 1 à 6 peut être exécuté.

17. Dispositif de déroulement (2) pour la réalisation d'un processus de déroulement d'un matériau en forme de bande (11) comprenant un film de matière plastique à partir d'une bobine (10), comprenant un support de bobine (70) sur lequel la bobine (10) peut être logée pendant le processus de déroulement,
une interface de réception (80) pour la réception d'une corrélation d'une irrégularité (12) du matériau en forme de bande (11) avec un paramètre de marche (13) de la bobine (10),
et une unité de détermination de position (22) grâce à laquelle un déroulement du matériau en forme de bande (11) peut être surveillé pendant le processus de déroulement, de façon à ce qu'une mesure de réaction est appliquée en réponse à l'irrégularité (12) lorsqu'une position du matériau en forme de bande (11) est atteinte sur la base de la corrélation de l'irrégularité (12) avec le paramètre de marche (13) lors du processus de déroulement,
dans lequel une unité de calcul (30) est prévue, grâce à laquelle un procédé de commande (200) selon l'une des revendications 7 à 14 peut être exécuté.

18. Système de traitement (3) pour le traitement d'un matériau en forme de bande (11), comprenant un dispositif d'enroulement (1) selon la revendication 16 et un dispositif de déroulement (2) selon la revendication 17.
